# EUROPEAN PATENT APPLICATION

(11) **EP 4 852 510 A1**
(43) Date of publication of application: **09.12.2026**
(21) Application number: 24930566.5
(22) Date of filing: 19.12.2024
(51) Int. Cl.: H04W 28/06

(54) **COMMUNICATION METHOD AND RELATED DEVICE**

(30) Priority: 18.03.2024 CN 202410312951
(71) Applicant: Honor Device Co., Ltd., Shenzhen, Guangdong 518040 (CN)
(72) Inventor: ZHANG, Mingzhu, Shenzhen, Guangdong 518040 (CN); ZHENG, Xiaoxiao, Shenzhen, Guangdong 518040 (CN); SHAN, Baokun, Shenzhen, Guangdong 518040 (CN)
(74) Representative: Henselmann, Alexander Gerhard
(86) International application number: PCT/CN2024/140561
(87) International publication number: WO 2025/194910

(57) **Abstract**

This application provides a communication method and a related device, and pertains to the field of communication technologies. In the method, in a process in which a transmit end sends data to a receive end, when the transmit end discards a part of data packets, the transmit end may send, to the receive end, a discard report indicating a discarded data packet, to notify, by using the discard report, the receive end of the data packet discarded by the transmit end, so that the receive end exits a pending state. In this way, a deadlock of data transmission between the transmit end and the receive end is avoided.

## Description

This application claims priority to Chinese Patent Application No. 202410312951.6, filed with the China National Intellectual Property Administration on March 18, 2024 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Layer 2 (layer 2, L2) of new radio (new radio, NR) includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical (physical, PHY) layer, and the like. In a process in which a transmit end (for example, user equipment (user equipment, UE)) sends data to a receive end (for example, a network side device), an RLC layer of the transmit end may include header information of the RLC layer in a PDCP service data unit (service data unit, SDU) from a PDCP layer, encapsulate the PDCP service data unit into an RLC SDU for entering a sending queue of a sending window of the RLC layer, and deliver the RLC SDU to a MAC layer. Then, the MAC layer encapsulates the RLC SDU into a MAC SDU, and sends the MAC SDU to the receive end via a PHY layer.

In some scenarios, in a process in which the transmit end transmits data to the receive end, the transmit end may discard some data packets. After the transmit end discards the data packet, the receive end is in a pending (pending) state because the receive end cannot receive the data packet. In this case, the transmit end may be triggered to retransmit the data packet. However, the transmit end has discarded the data packet and cannot retransmit the data packet. Consequently, the receive end is in the pending state, and a deadlock of data transmission between the transmit end and the receive end is caused.

### SUMMARY

Embodiments of this application provide a communication method and a related device. A transmit end may notify a receive end of a discarded data packet, so that the receive end exits a pending state for reception. In this way, a deadlock of data transmission between the transmit end and the receive end is avoided.

According to a first aspect, a communication method is provided, applied to a transmit end. The method includes: determining a discarded data packet; and sending a first packet to a receive end, where the first packet indicates the discarded data packet.

The first packet may be a discard report mentioned in this application.

In this implementation, the transmit end may send, to the receive end, a discard report indicating the discarded data packet, so that the receive end determines, based on the discard report, the discarded data packet, and exits a pending state for receiving the data packet, to avoid a deadlock between the transmit end and the receive end.

Optionally, the discarded data packet may be an SDU, or may be a PDU.

Optionally, the discarded data packet may be a data packet at an RLC layer, may be a data packet at a PDCP layer, or may be a data packet at another layer.

Optionally, the discard report may be a packet of a fixed size or a fixed size.

In a possible implementation of the first aspect, sending the first packet to the receive end includes: sending the first packet to the receive end when detecting that a first condition is met, where the first condition includes at least one of the following: a quantity of data packets included in the discarded data packet is greater than a first quantity; duration from previous sending of the first packet reaches first duration, or a timer indicating the duration from previous sending of the first packet stops running; and at least one data packet that is not completely received by the receive end exists in the discarded data packets, or an acknowledgment feedback for at least one data packet of the discarded data packet is not received.

The first condition may be a send condition of the discard report mentioned in this application.

When the transmit end meets the send condition of the discard report, the transmit end may send the discard report to the receive end. Send condition
a quantity of data packets included in the discarded data packet is greater than a first quantity (for example, 100 or 200);
duration from previous sending of a discard report reaches first duration (for example, 30 seconds or 35 seconds), or a timer indicating the duration from previous sending of the discard report stops running (that is, the timer indicating the duration from previous sending of the discard report expires); and
at least one data packet that is not completely received by the receive end exists in the discarded data packet, or an acknowledgment feedback for at least one data packet of the discarded data packet is not received.

In a possible implementation of the first aspect, the first packet includes first information, and the first packet indicates the discarded data packet by using the first information.

In a possible implementation of the first aspect, the first information includes: a first field, indicating a sequence number or a COUNT value of the discarded data packet.

The first field may be a Discard_SN field or a Discard_COUNT field in the discard report mentioned in this application, or may be an FDS field or an FDC field in the discard report mentioned in this application.

The Discard_SN field may indicate an SN of each data packet of a data packet discarded by the RLC layer, or may indicate an SN of a 1^{st} data packet of consecutively discarded data packets or a separately discarded data packet of the data packet discarded by the RLC layer.

The Discard_COUNT field may indicate an SN of each data packet of a data packet discarded by the PDCP layer, or may indicate a COUNT value of a 1^{st} data packet of consecutively discarded data packets or a separately discarded data packet of the data packet discarded by the RLC layer.

The FDS field indicates a sequence number of a 1^{st} data packet of the data packet discarded by the RLC layer.

The FDC field indicates a COUNT value of a 1^{st} data packet of the data packet discarded by the PDCP layer.

Optionally, the Discard_SN field and the FDS field occupy 12 bits or 18 bits. The Discard_COUNT field and the FDC field occupy 32 bits.

In a possible implementation of the first aspect, the first packet further includes: second information, indicating that the first packet is a control packet; and third information, indicating that the first packet is a packet indicating the discarded data packet.

Optionally, the second information includes a D/C field, and occupies one bit. When the D/C field is a first value (for example, 0), it indicates that the discard report is a data packet; or when the D/C field is a second value (for example, 1), it indicates that the discard report is a control packet. A value of the D/C field is the second value.

The third information includes a CPT field or a PDU TYPE field, and occupies three bits. The CPT field indicates that the discard report is a packet that indicates a data packet discarded by the RLC layer. The PDU TYPE field indicates that the discard report is a packet that indicates a data packet discarded by the PDCP layer.

Optionally, the CPT field or the PDU TYPE field in the discard report is located after the D/C field. For example, the D/C field occupies a 0^{th} bit of a 0^{th} octet of the discard report. The CPT field or the PDU TYPE field occupies 1^{st} to 3^{rd} bits of the 0^{th} octet of the discard report.

In a possible implementation of the first aspect, the first information further includes at least one of the following fields: a second field, where the second field indicates whether consecutively discarded data packets exist; a third field, where the third field indicates a quantity of consecutively discarded data packets; a fourth field, indicating a quantity of pieces of discard information carried in the first packet, where one piece of discard information indicates one discarded data packet or a plurality of consecutively discarded data packets; a fifth field, where the fifth field indicates whether discard information still exists; a sixth field, indicating a discard status of at least one data packet, where the discard status is "discarded" or "not discarded"; and a seventh field, indicating a length of the sixth field.

The second field may be an S field in the discard report mentioned in this application, and occupies one bit.

The third field may be a range field in the discard report mentioned in this application, and occupies eight bits or ten bits.

The fourth field may be a number field in the discard report mentioned in this application, and occupies four to eight bits.

The fifth field may be a P1 field in the discard report mentioned in this application, and occupies one bit.

The sixth field may be a Bitmap field in the discard report mentioned in this application.

The seventh field may be a Length field in the discard report mentioned in this application.

Optionally, combinations of fields included in the discard report include but are not limited to the following:
(a) a D/C field, a CPT field, and a Discard_SN field; or a D/C field, a PDU TYPE field, and a Discard_COUNT field;
(b) a D/C field, a CPT field, a Discard_SN field, an S field, and a range field; or a D/C field, a PDU TYPE field, a Discard_COUNT field, an S field, and a range field;
(c) a D/C field, a CPT field, an FDS field, and a Bitmap field; or a D/C field, a PDU TYPE field, an FDC field, and a Bitmap field;
(d) a D/C field, a CPT field, a Discard_SN field, an S field, a range field, and a number field; or a D/C field, a PDU TYPE field, a Discard_COUNT field, an S field, a range field, and a number field;
(e) a D/C field, a CPT field, a Discard_SN field, an S field, a range field, and a P1 field; or a D/C field, a PDU TYPE field, a Discard_COUNT field, an S field, a range field, and a P1 field; and
(f) a D/C field, a CPT field, an FDS field, a Bitmap field, and a Length field; or a D/C field, a PDU TYPE field, an FDC field, a Bitmap field, and a Length field.

Optionally, when a combination of fields included in the discard report may be the combination (a), the discard report may indicate the discarded data packet by using the Discard_SN field or the Discard_COUNT field.

In a possible implementation of the first aspect, the discarded data packet includes P data packets, the first information includes M first fields, P and M are positive integers, and M≥P. First P first fields of the M first fields indicate sequence numbers or COUNT values of the P data packets.

Optionally, the discard report includes one D/C field, one CPT field, and M Discard_SN fields, where the M Discard_SN fields are located after the CPT field. Alternatively, the discard report includes one D/C field, one PDU TYPE field, and M Discard_COUNT fields, where the M Discard_COUNT fields are located after the PDU TYPE field.

Optionally, corresponding to the discard report being the packet of the fixed size and the discard report including one D/C field, one CPT field, and M Discard_SN fields, first P Discard_SN fields of the M Discard_SN fields indicate SNs of P data packets discarded by the RLC layer. Values of last M-P Discard_SN fields of the M Discard_SN fields may be 0, indicating that the fields do not exist. For example, when M=2 and P=1, a 1^{st} Discard_SN field in the discard report indicates a sequence number of one data packet discarded by the RLC layer, and a value of a 2^{nd} Discard_SN field in the discard report is 0.

Optionally, corresponding to the discard report being the packet of the fixed size and the discard report including one D/C field, one PDU TYPE field, and M Discard_COUNT fields, first P Discard_COUNT fields of the M Discard_COUNT fields indicate COUNT values of P data packets discarded by the PDCP layer. Values of last M-P Discard_COUNT fields of the M Discard_COUNT fields may be 0, indicating that the fields do not exist. For example, when M=2 and P=1, a 1^{st} Discard_COUNT field in the discard report indicates a COUNT value of one data packet discarded by the PDCP layer, and a value of a 2^{nd} Discard_COUNT field in the discard report is 0.

In a possible implementation of the first aspect, corresponding to the first field indicating the sequence number of the discarded data packet and including 12 bits, an i^{th} first field occupies (12i-8)^{th} to (12i+3)^{th} bits of the first packet; corresponding to the first field indicating the sequence number of the discarded data packet and including 18 bits, an i^{th} first field occupies (18i-14)^{th} to (18i+3)^{th} bits of the first packet; or corresponding to the first field indicating the COUNT value of the discarded data packet, an i^{th} first field occupies (32i-14)^{th} to (32i+8)^{th} bits of the first packet, where i is a positive integer, and 1≤i≤M.

Optionally, corresponding to the RLC layer, the discard report includes one D/C field, one PDU TYPE field, and M Discard_COUNT fields. The D/C field occupies a 0^{th} bit of the discard report. The CPT field occupies 1^{st} to 3^{rd} bits of the discard report. When the Discard_SN field occupies 12 bits, an i^{th} Discard_SN field occupies (12i-8)^{th} to (12i+3)^{th} bits of the discard report; or when the Discard_SN field occupies 18 bits, an i^{th} Discard_SN field occupies (18i-14)^{th} to (18i+3)^{th} bits of the discard report, where 1≤i≤M.

Optionally, corresponding to the PDCP layer, the discard report includes one D/C field, one PDU TYPE field, and M Discard_COUNT fields. The D/C field occupies a 0^{th} bit of the discard report. The PDU TYPE field occupies 1^{st} to 3^{rd} bits of the discard report. An i^{th} Discard_COUNT field occupies (32i-14)^{th} to (32i+8)^{th} bits of the discard report.

In a possible implementation of the first aspect, the first information includes the first field, the second field, and the third field. The first field indicates a sequence number or a COUNT value of a 1^{st} data packet of consecutively discarded data packets, or indicates a sequence number or a COUNT value of a separately discarded data packet.

Corresponding to a combination of fields included in the discard report being the combination (b), the discard report includes the D/C field, the CPT field, the Discard_SN field, the S field, and the range field; or the D/C field, the PDU TYPE field, the Discard_COUNT field, the S field, and the range field. The Discard_SN field indicates a sequence number of a 1^{st} data packet of consecutively discarded data packets, or indicates a sequence number of a separately discarded data packet. The Discard_COUNT field indicates a COUNT value of a 1^{st} data packet of consecutively discarded data packets, or indicates a COUNT value of a separately discarded data packet.

In a possible implementation of the first aspect, the discarded data packets include J groups of data packets, and one group of data packets of the J groups of data packets includes a group of consecutively discarded data packets or one separately discarded data packet. The first information includes M first fields, M second fields, and M third fields. First J first fields, first J second fields, and first J third fields in the first information indicate the J groups of data packets. J and M are positive integers, and M≥J.

Optionally, corresponding to the RLC layer, the discard report includes one D/C field, one CPT field, M Discard_SN fields, M S fields, and M range fields, that is, includes one D/C field, one CPT field, and M pieces of discard information. First J Discard_SN fields, first J S fields, and first J range fields in the discard report indicate J pieces of discard information. The J pieces of discard information indicate J groups of data packets discarded by the RLC layer. One group of data packets of the J groups of data packets includes a group of a plurality of consecutively discarded data packets or one separately discarded data packet. J and M are positive integers, and M≥J.

Values of a j^{th} Discard_SN field, a j^{th} S field, and a j^{th} range field in the first J pieces of discard information of the discard report are respectively values of a Discard_SN field, an S field, and a range field corresponding to a j^{th} data packet discarded by the RLC layer. Values of a Discard_SN field, an S field, and a range field in last M-J pieces of discard information of the discard report may be 0, indicating that the fields do not exist. j is a positive integer, and 1≤j≤J.

Optionally, when the Discard_SN field occupies 12 bits and the range field occupies ten bits:
In some embodiments, an i^{th} Discard_SN field occupies a (4i-3)^{th} octet and 0^{th} to 3^{rd} bits of a (4i-2)^{th} octet of the discard report, an i^{th} S field occupies any one of 4^{th} to 7^{th} bits of the (4i-2)^{th} octet of the discard report, and an i^{th} range field occupies a (4i-1)^{th} octet and 0^{th} to 1^{st} bits of a 4i^{th} octet of the discard report.

For example, corresponding to M=4, the discard report includes four Discard_SN fields, four S fields, and four range fields.

A 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies a 3^{rd} octet and 0^{th} to 1^{st} bits of a 4^{th} octet of the discard report.

A 2^{nd} Discard_SN field occupies a 5^{th} octet and 0^{th} to 3^{rd} bits of a 6^{th} octet of the discard report, a 2^{nd} S field occupies a 4^{th} bit of the 6^{th} octet of the discard report, and a 2^{nd} range field occupies a 7^{th} octet and 0^{th} to 1^{st} bits of an 8^{th} octet of the discard report.

A 3^{rd} Discard_SN field occupies a 9^{th} octet and 0^{th} to 3^{rd} bits of a 10^{th} octet of the discard report, a 3^{rd} S field occupies a 4^{th} bit of the 10^{th} octet of the discard report, and a 3^{rd} range field occupies an 11^{th} octet and 0^{th} to 1^{st} bits of a 12^{th} octet of the discard report.

A 4^{th} Discard_SN field occupies a 13^{th} octet and 0^{th} to 3^{rd} bits of a 14^{th} octet of the discard report, a 4^{th} S field occupies a 4^{th} bit of the 14^{th} octet of the discard report, and a 4^{th} range field occupies a 15^{th} octet and 0^{th} to 1^{st} bits of a 16^{th} octet of the discard report.

In some other embodiments, an i^{th} Discard_SN field occupies a (3i-2)^{th} octet and 0^{th} to 3^{rd} bits of a (3i-1)^{th} octet of the discard report, an i^{th} S field occupies a 4^{th} or 5^{th} bit of the (3i-1)^{th} octet of the discard report, and an i^{th} range field occupies 6^{th} to 7^{th} bits of the (3i-1)^{th} octet of the discard report and a 3i^{th} octet of the discard data report.

For example, corresponding to M=1, the discard report includes one Discard_SN field, one S field, and one range field. A 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies 6^{th} to 7^{th} bits of the 2^{nd} octet of the discard report and a 3^{rd} octet of the discard report.

In some other embodiments, an i^{th} Discard_SN field occupies 4^{th} to 7^{th} bits of a (4i-4)^{th} octet and a (4i-3)^{th} octet of the discard report, an i^{th} S field occupies a 0^{th} bit of a (4i-2)^{th} octet of the discard report, and an i^{th} range field occupies 1^{st} to 7^{th} bits of the (4i-2)^{th} octet and 0^{th} to 3^{rd} bits of a (4i-1)^{th} octet of the discard report.

For example, corresponding to M=2, the discard report includes two Discard_SN fields, two S fields, and two range fields. A 1^{st} Discard_SN field occupies 4^{th} to 7^{th} bits of a 0^{th} octet and a 1^{st} octet of the discard report, a 1^{st} S field occupies a 0^{th} bit of a 2^{nd} octet of the discard report, and a 1^{st} range field occupies 0^{th} to 7^{th} bits of the 2^{nd} octet and 0^{th} to 3^{rd} bits of a 3^{rd} octet of the discard report.

A 2^{nd} Discard_SN field occupies 4^{th} to 7^{th} bits of a 4^{th} octet and a 5^{th} octet of the discard report, a 2^{nd} S field occupies a 0^{th} bit of a 6^{th} octet of the discard report, and a 2^{nd} range field occupies 0^{th} to 2^{nd} bits of a 7^{th} octet of the discard report.

Optionally, when the Discard_SN field occupies 12 bits, the range field occupies ten bits, and M is greater than 1:

In some embodiments, a 1^{st} Discard_SN field occupies 4^{th} to 7^{th} bits of a 0^{th} octet of the discard report and a 1^{st} octet of the discard report, and a (k+1)^{th} Discard_SN field occupies a (3k+1)^{th} octet and 0^{th} to 3^{rd} bits of a (3k+2)^{th} octet of the discard report. k is a positive integer, and 1≤k≤M-1.

A 1^{st} S field occupies any one of 0^{th} to 5^{th} bits of a 2^{nd} octet of the discard report, and a (k+1)^{th} S field occupies a 4^{th} or 5^{th} bit of the (3k+2)^{th} octet of the discard report.

A 1^{st} range field occupies 6^{th} to 7^{th} bits of the 2^{nd} octet of the discard report and a 3^{rd} octet of the discard report, and a (k+1)^{th} range field occupies 6^{th} to 7^{th} bits of a (3k-1)^{th} octet of the discard report and a 3k^{th} octet of the range field.

For example, corresponding to M=3, the discard report includes three Discard_SN fields, three S fields, and three range fields. The 1^{st} Discard_SN field occupies 4^{th} to 7^{th} bits of a 0^{th} octet of the discard report and a 1^{st} octet of the discard report, the 1^{st} S field occupies a 0^{th} bit of a 2^{nd} octet of the discard report, and the 1^{st} range field occupies 6^{th} to 7^{th} bits of the 2^{nd} octet of the discard report and a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies 6^{th} to 7^{th} bits of the 5^{th} octet of the discard report and a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies 6^{th} to 7^{th} bits of the 8^{th} octet of the discard report and a 9^{th} octet of the discard report.

Optionally, when the Discard_SN field occupies 18 bits and the range field occupies eight bits:
In some embodiments, an i^{th} Discard_SN field occupies a (4i-3)^{th} octet, a (4i-2)^{th} octet, and 0^{th} to 1^{st} bits of a (4i-1)^{th} octet of the discard report, an i^{th} S field occupies any one of 2^{nd} to 7^{th} bits of the (4i-1)^{th} octet of the discard report, and an i^{th} range field occupies a 4i^{th} octet of the discard report.

For example, corresponding to M=3, the discard report includes three Discard_SN fields, three S fields, and three range fields.

A 1^{st} Discard_SN field occupies a 1^{st} octet, a 2^{nd} octet, and 0^{th} to 1^{st} bits of a 3^{rd} octet of the discard report, a 1^{st} S field occupies a 2^{nd} bit of the 3^{rd} octet of the discard report, and a 1^{st} range field occupies a 4^{th} octet of the discard report.

A 2^{nd} Discard_SN field occupies a 5^{th} octet, a 6^{th} octet, and 0^{th} to 1^{st} bits of a 7^{th} octet of the discard report, a 1^{st} S field occupies a 2^{nd} bit of the 7^{th} octet of the discard report, and a 1^{st} range field occupies an 8^{th} octet of the discard report.

A 3^{rd} Discard_SN field occupies a 9^{th} octet, a 10^{th} octet, and 0^{th} to 1^{st} bits of an 11^{th} octet of the discard report, a 3^{rd} S field occupies a 2^{nd} bit of the 11^{th} octet of the discard report, and a 3^{rd} range field occupies a 12^{th} octet of the discard report.

Optionally, corresponding to the PDCP layer, the discard report includes one D/C field, one PDU TYPE field, M Discard_COUNT fields, M S fields, and M range fields, that is, includes one D/C field, one PDU TYPE field, and M pieces of discard information. First J Discard_SN fields, first J S fields, and first J range fields in the discard report indicate J pieces of discard information. The J pieces of discard information indicate J groups of data packets discarded by the RLC layer. One group of data packets of the J groups of data packets includes a group of a plurality of consecutively discarded data packets or one separately discarded data packet. J and M are positive integers, and M≥J.

Values of a j^{th} Discard_COUNT field, a j^{th} S field, and a j^{th} range field in the first J pieces of discard information of the discard report are respectively values of a Discard_COUNT field, an S field, and a range field corresponding to a j^{th} data packet discarded by the PDCP layer. Values of a Discard_COUNT field, an S field, and a range field in last M-J pieces of discard information of the discard report may be 0, indicating that the fields do not exist.

In some embodiments, when the range field occupies ten bits, an i^{th} Discard_COUNT field occupies (6i-5)^{th} to (6i-2)^{th} octets of the discard report, an i^{th} S field occupies any one of 0^{th} to 5^{th} bits of a (6i-1)^{th} octet of the discard report, and an i^{th} range field occupies 6^{th} to 7^{th} bits of the (6i-1)^{th} octet and a 6i^{th} octet of the discard report.

For example, corresponding to M=2, the discard report includes two Discard_COUNT fields, two S fields, and two range fields.

A 1^{st} Discard_COUNT field occupies 1^{st} to 4^{th} octets of the discard report, a 1^{st} S field occupies a 0^{th} bit of a 5^{th} octet of the discard report, and a 1^{st} range field occupies 6^{th} to 7^{th} bits of the 5^{th} octet and a 6^{th} octet of the discard report.

A 2^{nd} Discard_COUNT field occupies 7^{th} to 10^{th} octets of the discard report, a 2^{nd} S field occupies a 0^{th} bit of an 11^{th} octet of the discard report, and a 2^{nd} range field occupies 6^{th} to 7^{th} bits of the 11^{th} octet and a 12^{th} octet of the discard report.

In some other embodiments, when the range field occupies ten bits, an i^{th} Discard_COUNT field occupies (7i-6)^{th} to (7i-3)^{th} octets of the discard report, an i^{th} S field occupies any one of 0^{th} to 7^{th} bits of a (7i-2)^{th} octet of the discard report, and an i^{th} range field occupies a (7i-1)^{th} octet and 0^{th} to 1^{st} bits of a 7i^{th} octet of the discard report.

For example, corresponding to M=2, the discard report includes two Discard_COUNT fields, two S fields, and two range fields.

A 1^{st} Discard_COUNT field occupies 1^{st} to 4^{th} octets of the discard report, a 1^{st} S field occupies a 0^{th} bit of a 5^{th} octet of the discard report, and a 1^{st} range field occupies a 6^{th} octet and 6^{th} to 7^{th} bits of a 7^{th} octet of the discard report.

A 2^{nd} Discard_COUNT field occupies 8^{th} to 11^{th} octets of the discard report, a 2^{nd} S field occupies a 0^{th} bit of a 12^{th} octet of the discard report, and a 2^{nd} range field occupies a 13^{th} octet and 0^{th} to 1^{st} bits of a 14^{th} octet of the discard report.

In a possible implementation of the first aspect, the first information further includes the fourth field. Optionally, the fourth field is located before a 1^{st} first field.

Optionally, for a discard report of a non-fixed size, a combination of fields included in the discard report may be the combination (d). The number field is located before discard information (specifically, for example, a Discard_SN field or a Discard_COUNT field). When the number field is located before a 1^{st} piece of discard information, the number field indicates a quantity of pieces of discard information in the discard report. When the number field is located between a 1^{st} piece of discard information and a 2^{nd} piece of discard information, the number field indicates a quantity of pieces of discard information other than the 1^{st} piece of discard information.

Optionally, corresponding to the RLC layer, the discard report includes one D/C field, one CPT field, M Discard_SN fields, M S fields, M range fields, and one number field.

In some embodiments, when the Discard_SN field occupies 12 bits, the range field occupies eight bits, and the number field occupies four bits:
The number field occupies 4^{th} to 7^{th} bits of a 0^{th} octet of the discard report.

An i^{th} Discard_SN field occupies a (3i-2)^{th} octet and 0^{th} to 3^{rd} bits of a (3i-1)^{th} octet of the discard report.

An i^{th} S field occupies any one of 4^{th} to 7^{th} bits of the (3i-1)^{th} octet of the discard report.

An i^{th} range field occupies a 3i^{th} octet of the discard report.

For example, the discard report includes three Discard_SN fields, three S fields, and three range fields.

A 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies a 9^{th} octet of the discard report.

In some embodiments, when the Discard_SN field occupies 12 bits, the range field occupies eight bits, the number field occupies six bits, and M is greater than 1:

The number field occupies 4^{th} to 7^{th} bits of a 0^{th} octet and 0^{th} to 1^{st} bits of a 1^{st} octet of the discard report.

A 1^{st} Discard_SN field occupies 2^{nd} to 7^{th} bits of a 1^{st} octet and 0^{th} to 5^{th} bits of a 2^{nd} octet of the discard report, and a (k+1)^{th} Discard_SN field occupies a (3k+1)^{th} octet and 0^{th} to 3^{rd} bits of a (3k+2)^{th} octet of the discard report.

A 1^{st} S field occupies a 6^{th} or 7^{th} bit of the 2^{nd} octet of the discard report, and a (k+1)^{th} S field occupies any one of 4^{th} to 7^{th} bits of the (3k+2)^{th} octet of the discard report.

A (k+1)th range field occupies a 3k^{th} octet of the discard report.

For example, corresponding to M=3, the discard report includes three Discard_SN fields, three S fields, and three range fields.

A 1^{st} Discard_SN field occupies 2^{nd} to 7^{th} bits of a 1^{st} octet and 0^{th} to 5^{th} bits of a 2^{nd} octet of the discard report, a 1^{st} S field occupies a 6^{th} bit of the 2^{nd} octet of the discard report, and a 1^{st} range field occupies a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies a 9^{th} octet of the discard report.

Optionally, corresponding to the PDCP layer, the discard report includes one D/C field, one PDU TYPE field, M Discard_COUNT fields, M S fields, M range fields, and one number field.

In some embodiments, when the range field occupies eight bits and the number field occupies four bits:
The number field occupies 4^{th} to 7^{th} bits of a 0^{th} octet of the discard report.

An i^{th} Discard_COUNT field occupies (6i-5)^{th} to (6i-2)^{th} octets of the discard report.

An i^{th} S field occupies any one of 0^{th} to 8^{th} bits of a (6i-1)^{th} octet of the discard report.

An i^{th} range field occupies a 6i^{th} octet of the discard report.

For example, corresponding to M=2, the discard report includes two Discard_COUNT fields, two S fields, and two range fields.

A 1^{st} Discard_COUNT field occupies 1^{st} to 4^{th} octets of the discard report, a 1^{st} S field occupies a 0^{th} bit of a 5^{th} octet of the discard report, and a 1^{st} range field occupies a 6^{th} octet of the discard report.

A 2^{nd} Discard_COUNT field occupies 7^{th} to 10^{th} octets of the discard report, a 2^{nd} S field occupies a 0^{th} bit of an 11^{th} octet of the discard report, and a 2^{nd} range field occupies a 12^{th} octet of the discard report.

When the range field occupies eight bits, the number field occupies six bits, and M is greater than 1:
The number field occupies 4^{th} to 7^{th} bits of a 0^{th} octet and 0^{th} to 1^{st} bits of a 1^{st} octet of the discard report.

A 1^{st} S field occupies any one of 2^{nd} to 7^{th} bits of the 1^{st} octet of the discard report, and a (k+1)^{th} S field occupies any one of 4^{th} to 7^{th} bits of a (6k+1)^{th} octet of the discard report.

A 1^{st} Discard_COUNT field occupies 2^{nd} to 5^{th} octets of the discard report, and a (k+1)^{th} Discard_COUNT field occupies (6k-4)^{th} to (6k-1)^{th} octets of the discard report.

A k^{th} range field occupies a 6k^{th} octet of the discard report.

For example, corresponding to M=2, the discard report includes two Discard_COUNT fields, two S fields, and two range fields.

A 1^{st} S field occupies a 2^{nd} bit of a 1^{st} octet of the discard report, a 1^{st} Discard_COUNT field occupies 2^{nd} to 5^{th} octets of the discard report, and a 1^{st} range field occupies a 6^{th} octet of the discard report.

A 2^{nd} S field occupies a 0^{th} bit to a 7^{th} octet of the discard report, a 2^{nd} Discard_COUNT field occupies 8^{th} to 11^{th} octets of the discard report, and a 2^{nd} range field occupies a 12^{th} octet of the discard report.

In a possible implementation of the first aspect, the first information includes the first field, the second field, the third field, and the fifth field. The first field indicates a sequence number or a COUNT value of a 1^{st} data packet of consecutively discarded data packets, or indicates a sequence number or a COUNT value of a corresponding separately discarded data packet.

Optionally, an i^{th} fifth field is located after an i^{th} first field, and an i^{th} second field is located after the i^{th} fifth field.

For a discard report of a non-fixed size, a combination of fields included in the discard report may be the combination (e).

Optionally, corresponding to the RLC layer, the discard report includes one D/C field, one CPT field, M Discard_SN fields, M S fields, M range fields, and M P1 fields.

In some embodiments, when the Discard_SN field occupies 18 bits and the range field occupies eight bits:

An i^{th} Discard_SN field occupies a (4i-3)^{th} octet, a (4i-2)^{th} octet, and 0^{th} to 1^{st} bits of a (4i-1)^{th} octet of the discard report.

An i^{th} P1 field occupies a 3^{rd} bit of the (4i-1)^{th} octet of the discard report.

An i^{th} S field occupies any one of 3^{rd} to 8^{th} bits of the (4i-1)^{th} octet of the discard report.

An i^{th} range field occupies a 4i^{th} octet of the discard report.

For example, corresponding to M=3, the discard report includes three Discard_SN fields, three S fields, three range fields, and three P1 fields.

A 1^{st} Discard_SN field occupies a 1^{st} octet, a 2^{nd} octet, and 0^{th} to 1^{st} bits of a 3^{rd} octet of the discard report, a 1^{st} P1 field occupies a 2^{nd} bit of the 3^{rd} octet of the discard report, a 1^{st} S field occupies a 3^{rd} bit of the 3^{rd} octet of the discard report, and a 1^{st} range field occupies a 4^{th} octet of the discard report.

A 2^{nd} Discard_SN field occupies a 5^{th} octet, a 6^{th} octet, and 0^{th} to 1^{st} bits of a 7^{th} octet of the discard report, a 2^{nd} P1 field occupies a 2^{nd} bit of the 7^{th} octet of the discard report, a 2^{nd} S field occupies a 3^{rd} bit of the 7^{th} octet of the discard report, and a 1^{st} range field occupies an 8^{th} octet of the discard report.

A 3^{rd} Discard_SN field occupies a 9^{th} octet, a 10^{th} octet, and 0^{th} to 1^{st} bits of an 11^{th} octet of the discard report, a 3^{rd} P1 field occupies a 2^{nd} bit of the 11^{th} octet of the discard report, a 3^{rd} S field occupies a 3^{rd} bit of the 11^{th} octet of the discard report, and a 3^{rd} range field occupies a 12^{th} octet of the discard report.

In some embodiments, when the Discard_SN field occupies 12 bits and the range field occupies eight bits:
An i^{th} Discard_SN field occupies a (3i-2)^{th} octet and 0^{th} to 1^{st} bits of a (3i-1)^{th} octet of the discard report.

An i^{th} P1 field occupies a 3^{rd} bit of the (3i-1)^{th} octet of the discard report.

An i^{th} S field occupies any one of 3^{rd} to 8^{th} bits of the (3i-1)^{th} octet of the discard report.

An i^{th} range field occupies a 3i^{th} octet of the discard report.

For example, corresponding to M=2, the discard report includes two Discard_SN fields, two S fields, two range fields, and two P1 fields.

A 1^{st} Discard_SN field occupies a 1^{st} octet and 0^{th} to 1^{st} bits of a 2^{nd} octet of the discard report, a 1^{st} P1 field occupies a 3^{rd} bit of the 2^{nd} octet of the discard report, a 1^{st} S field occupies a 3^{rd} bit of the 2^{nd} octet of the discard report, and a 1^{st} range field occupies a 3^{rd} octet of the discard report.

A 2^{nd} Discard_SN field occupies a 4^{th} octet and 0^{th} to 1^{st} bits of a 5^{th} octet of the discard report, a 2^{nd} P1 field occupies a 3^{rd} bit of the 5^{th} octet of the discard report, a 2^{nd} S field occupies a 3^{rd} bit of the 5^{th} octet of the discard report, and a 2^{nd} range field occupies a 6^{th} octet of the discard report.

Optionally, corresponding to the PDCP layer, the discard report includes one D/C field, one PDU TYPE field, M Discard_COUNT fields, M S fields, M range fields, and M P1 fields.

In some embodiments, when the range field occupies eight bits:
An i^{th} Discard_COUNT field occupies (6i-5)^{th} to (6i-2)^{th} octets of the discard report.

An i^{th} P1 field occupies a 1^{st} bit of a (6i-1)^{th} octet of the discard report.

An i^{th} S field occupies any one of 1^{st} to 8^{th} bits of the (6i-1)^{th} octet of the discard report.

An i^{th} range field occupies a 6i^{th} octet of the discard report.

For example, corresponding to M=2, the discard report includes two Discard_COUNT fields, two S fields, two range fields, and two P1 fields.

A 1^{st} Discard_COUNT field occupies 1^{st} to 4^{th} octets of the discard report, a 1^{st} P1 field occupies a 0^{th} bit of a 5^{th} octet of the discard report, a 1^{st} S field occupies a 1^{st} bit of the 5^{th} octet of the discard report, and a 1^{st} range field occupies a 6^{th} octet of the discard report.

A 2^{nd} Discard_COUNT field occupies 7^{th} to 10^{th} octets of the discard report, a 2^{nd} P1 field occupies a 0^{th} bit of an 11^{th} octet of the discard report, a 2^{nd} S field occupies a 1^{st} bit of the 11^{th} octet of the discard report, and a 2^{nd} range field occupies a 12^{th} octet of the discard report.

In a possible implementation of the first aspect, the first information includes the first field and the sixth field. The first field indicates a sequence number or a COUNT value of a 1^{st} data packet of the discarded data packet. Optionally, the sixth field is located after the first field.

Corresponding to a discard report of a fixed size, a combination of fields included in the discard report may alternatively be the combination (c).

Optionally, corresponding to the RLC layer, the discard report includes the D/C field, the CPT field, the FDS field, and the Bitmap field.

In some embodiments, when the FDS field occupies 12 bits and the length of the Bitmap field is Z (Z is a positive integer) octets, the FDS field occupies 4^{th} to 7^{th} bits of a 0^{th} octet and a 2^{nd} octet of the discard report, and the Bitmap field occupies 2^{nd} to (1+Z)^{th} octets of the discard report. For example, when Z=4, the Bitmap field occupies 2^{nd} to 5^{th} octets of the discard report.

In some other embodiments, when the FDS field occupies 12 bits and the length of the Bitmap field is Y bits, the FDS field occupies 4^{th} to 7^{th} bits of a 0^{th} octet and a 2^{nd} octet of the discard report, and the Bitmap field occupies 16^{th} to (16+Y)^{th} bits of the discard report. For example, when Y=14, the Bitmap field occupies 16^{th} to 30^{th} bits of the discard report.

In some embodiments, when the FDS field occupies 18 bits and the Bitmap field occupies Z octets, the FDS field occupies 6^{th} to 7^{th} bits of a 0^{th} octet, a 1^{st} octet, and a 2^{nd} octet of the discard report, and the Bitmap field occupies 3^{rd} to (2+Z)^{th} octets of the discard report. For example, when Z=4, the Bitmap field occupies 3^{rd} to 6^{th} octets of the discard report.

In some other embodiments, when the FDS field occupies 18 bits and the length of the Bitmap field is Y bits, the FDS field occupies 6^{th} to 7^{th} bits of a 0^{th} octet, a 1^{st} octet, and a 2^{nd} octet of the discard report, and the Bitmap field occupies 24^{th} to (24+Y)^{th} bits of the discard report. For example, when Y=14, the Bitmap field occupies 24^{th} to 38^{th} bits of the discard report.

Optionally, corresponding to the PDCP layer, the discard report includes the D/C field, the CPT field, the FDC field, and the Bitmap field.

In some embodiments, when the Bitmap field occupies Z octets, the FDC field occupies 1^{st} to 4^{th} octets of the discard report, and the Bitmap field occupies 5^{th} to (4+Z)^{th} octets of the discard report. For example, when X=4, the Bitmap field occupies 5^{th} to 8^{th} octets of the discard report.

In some other embodiments, when the length of the Bitmap field is Y bits, the FDC field occupies 1^{st} to 4^{th} octets of the discard report, and the Bitmap field occupies 40^{th} to (40+Y)^{th} bits of the discard report. For example, when Y=14, the Bitmap field occupies 40^{th} to 54^{th} bits of the discard report.

In a possible implementation of the first aspect, the first information further includes the seventh field. Optionally, the seventh field is located before the sixth field.

Corresponding to a discard report of a non-fixed size, a combination of the fields included in the discard report may alternatively be the combination (f).

Optionally, corresponding to the PDCP layer, the discard report includes the D/C field, the PDU TYPE field, the FDC field, the Bitmap field, and the Length field.

In some embodiments, corresponding to the Length field occupying L bits, the Bitmap field occupying Z octets, and 8j+1≤L≤8j+4, where j is an integer greater than or equal to 0, the Length field occupies 4^{th} to (L+4)^{th} bits of the discard report, the FDC field occupies (j+1)^{th} to (j+4)^{th} octets of the discard report, and the Bitmap field occupies (j+5)^{th} to (j+5+Z)^{th} octets of the discard report. Corresponding to the Length field occupying L bits, the Bitmap field occupying Z octets, and 8j+5≤L≤8j+8, the Length field occupies 4^{th} to (L+4)^{th} bits of the discard report, the FDC field occupies (j+2)^{th} to (j+5)^{th} octets of the discard report, and the Bitmap field occupies (j+6)^{th} to (j+6+Z)^{th} octets of the discard report.

In some embodiments, when the Length field occupies two bits, and the Length field indicates that the Bitmap field occupies N octets, the Length field occupies 4^{th} to 5^{th} bits of a 0^{th} octet of the discard report, and the FDC field occupies 1^{st} to 4^{th} octets of the discard report. When N is equal to 1, the Bitmap field occupies a 5^{th} octet of the discard report. When N is greater than 1, the Bitmap field occupies 5^{th} to (4+N)^{th} octets of the discard report.

Optionally, corresponding to the RLC layer, the discard report includes the D/C field, the CPT field, the FDS field, the Bitmap field, and the Length field.

In some embodiments, when the Length field occupies two bits, the Length field indicates that the Bitmap field occupies N octets, and the FDS field occupies 12 bits, the Length field occupies 4^{th} to 5^{th} bits of a 0^{th} octet of the discard report, and the FDS field occupies a 1^{st} octet and 0^{th} to 3^{rd} bits of a 2^{nd} octet of the discard report. When N is equal to 1, the Bitmap field occupies a 3^{rd} octet of the discard report. When N is greater than 1, the Bitmap field occupies 3^{rd} to (2+N)^{th} octets of the discard report.

In some other embodiments, when the Length field occupies two bits, the Length field indicates that the Bitmap field occupies N octets, and the FDS field occupies 18 bits, the Length field occupies 4^{th} to 5^{th} bits of a 0^{th} octet of the discard report, and the FDS field occupies 6^{th} to 7^{th} bits of the 0^{th} octet of the discard report and a 1^{st} octet and a 2^{nd} octet of the discard report. When N is equal to 1, the Bitmap field occupies a 3^{rd} octet of the discard report. When N is greater than 1, the Bitmap field occupies 3^{rd} to (2+N)^{th} octets of the discard report.

In a possible implementation of the first aspect, a structure of the first packet is the same as a structure of a second packet.

The second packet includes an eighth field, a ninth field, a tenth field, an eleventh field, a twelfth field, a thirteenth field, a fourteenth field, a fifteenth field, and a sixteenth field.

The eighth field is a second value different from a first value, the first value is a value used when the second packet indicates a receiving status of a data packet, and the second value is a value used when the second packet indicates the discarded data packet. When the eighth field is the first value: The ninth field is a field indicating a sequence number of a data packet neither reported as lost nor received by the receive end.

The tenth field is a field indicating whether the thirteenth field, the fourteenth field, and the fifteenth field exist subsequently.

The eleventh field is a field indicating a sequence number of a data packet detected as lost at the receive end.

The twelfth field is a field indicating whether the thirteenth field and the fourteenth field exist subsequently.

The thirteenth field is a field indicating a sequence number of a 1^{st} data packet of consecutively discarded data packets.

The fourteenth field is a field indicating a sequence number of a last data packet of the consecutively discarded data packets.

The fifteenth field is a field indicating whether consecutive data packets that are not received by the receive end exist.

The sixteenth field is a field indicating a quantity of consecutively discarded data packets starting from the data packet indicated by the fourteenth field.

When the eighth field is the second value:
The ninth field indicates a sequence number following a largest sequence number in discarded data packets.

The tenth field indicates whether discard information exists subsequently.

The eleventh field indicates a sequence number of the discarded data packet.

The twelfth field is 0 or an R bit.

The thirteenth field indicates a sequence number of a 1^{st} data packet of consecutively discarded data packets.

The fourteenth field indicates a sequence number of a last data packet of the consecutively discarded data packets.

The fifteenth field indicates whether consecutive data packets exist.

The sixteenth field indicates a quantity of consecutively discarded data packets.

The second packet may be a state report mentioned in this application.

The eighth field may be a CPT field in the state report mentioned in this application.

The ninth field may be an ACK_SN field in the state report mentioned in this application.

The tenth field may be an E1 field in the state report mentioned in this application.

The eleventh field may be a NACK_SN field in the state report mentioned in this application.

The twelfth field may be an E2 field in the state report mentioned in this application.

The thirteenth field may be an SOstart field in the state report mentioned in this application.

The fourteenth field may be an SOend field in the state report mentioned in this application.

The fifteenth field may be an E3 field in the state report mentioned in this application.

The sixteenth field may be a NACK range field in the state report mentioned in this application.

Optionally, when the CPT field in the state report of the application RLC layer is the second value, other fields in the state report may be interpreted as the following newly added definitions.
(1) The ACK_SN field indicates an SN following a largest SN in SNs of discarded data packets, for example, an SN next to the largest SN.
(2) The E1 field indicates whether discard information exists subsequently.
(3) The NACK_SN field indicates a corresponding SN of a discarded data packet (RLC SDU or RLC segment).
(4) The E2 field may be 0 or an R bit, and does not include valid information.
(5) The SOstart field does not exist, or the SOstart field (together with the SOend field) indicates that a part (segment) of an RLC SDU whose SN is NACK_SN is detected as discarded.
(6) The SOend field does not exist, or the SOend field (together with the SOstart field) indicates that a part (segment) of an RLC SDU whose SN is NACK_SN (SOend-related NACK_SN) is detected as discarded.
(7) The E3 field indicates whether consecutively discarded data packets exist.
(8) The NACK range indicates a quantity of consecutively discarded data packets.

In a possible implementation of the first aspect,
a structure of the first packet is the same as a structure of a second packet.

The second packet includes a seventeenth field, an eighteenth field, and a nineteenth field.

The seventeenth field is a second value different from a first value, the first value is a value used when the second packet indicates a receiving status of a data packet, and the second value is a value used when the second packet indicates the discarded data packet. When the seventeenth field is the first value:
The eighteenth field is a field indicating a sequence number or a COUNT value of a 1^{st} lost data packet.

The nineteenth field indicates a lost data packet or a correctly received data packet of a received data packet.

When the seventeenth field is the second value:
The eighteenth field indicates a sequence number or a COUNT value of a 1^{st} discarded data packet.

The nineteenth field indicates a discard status of the data packet.

The seventeenth field may be a PDU Type field in the state report mentioned in this application.

The eighteenth field may be an FMC field or an FMS field in the state report mentioned in this application.

The nineteenth field may be a Bitmap field in the state report mentioned in this application.

Optionally, when the PDU Type field in the state report is the second value, other fields in the state report may be interpreted as the following newly added definitions.
(1) Corresponding to the PDCP layer, the FMC field indicates a COUNT value of a 1^{st} discarded data packet. Alternatively, corresponding to the RLC layer, the FMS field indicates a sequence number of a 1^{st} discarded data packet.
(2) The Bitmap field indicates a discard status of the data packet.

According to a second aspect, a transmitter device is provided. The transmitter device includes one or more processors and one or more memories. The one or more memories store one or more computer programs, and the one or more computer programs include an instruction. When the instruction is executed by the one or more processors, the terminal device is enabled to perform the method in the first aspect.

According to a third aspect, a computer-readable storage medium is provided. The computer-readable storage medium stores a computer-executable program instruction. When the computer-executable program instruction is run on a computer, the computer is enabled to perform the method in any implementation of the first aspect.

According to a fourth aspect, a computer program product is provided. The computer program product includes computer program code. When the computer program code is run on a computer, the computer is enabled to perform the method in any implementation of the first aspect.

### BRIEF DESCRIPTION OF DRAWINGS

FIG. 1A is a schematic diagram of a user plane protocol architecture according to some embodiments of this application;
FIG. 1B is a schematic diagram of a process in which a transmit end transmits a protocol data unit set to a receive end according to some embodiments of this application;
FIG. 1C is a schematic diagram of a control plane protocol architecture according to some embodiments of this application;
FIG. 2A is a schematic diagram of a downlink data transmission protocol architecture according to some embodiments of this application;
FIG. 2B is a schematic diagram of an uplink data transmission protocol architecture according to some embodiments of this application;
FIG. 3 is a schematic diagram of a receiving window according to some embodiments of this application;
FIG. 4 is a schematic diagram of a state report according to some embodiments of this application;
FIG. 5 is a schematic diagram of another state report according to some embodiments of this application;
FIG. 6 is a schematic diagram of a reordering window according to some embodiments of this application;
FIG. 7 is a schematic diagram of a Bitmap according to some embodiments of this application;
FIG. 8 is a schematic diagram of another state report according to some embodiments of this application;
FIG. 9 is a schematic diagram of a communication scenario according to some embodiments of this application;
FIG. 10 is a schematic diagram of a discard report according to some embodiments of this application;
FIG. 11 is a schematic diagram of another discard report according to some embodiments of this application;
FIG. 12 is a schematic diagram of another discard report according to some embodiments of this application;
FIG. 13 is a schematic diagram of another discard report according to some embodiments of this application;
FIG. 14 is a schematic diagram of another discard report according to some embodiments of this application;
FIG. 15 is a schematic diagram of another discard report according to some embodiments of this application;
FIG. 16 is a schematic diagram of another discard report according to some embodiments of this application;
FIG. 17 is a schematic diagram of another discard report according to some embodiments of this application;
FIG. 18A is a schematic diagram of another discard report according to some embodiments of this application;
FIG. 18B is a schematic diagram of another discard report according to some embodiments of this application;
FIG. 19 is a schematic diagram of another discard report according to some embodiments of this application;
FIG. 20 is a schematic diagram of another discard report according to some embodiments of this application;
FIG. 21 is a schematic diagram of another discard report according to some embodiments of this application;
FIG. 22 is a schematic diagram of another discard report according to some embodiments of this application;
FIG. 23 is a schematic diagram of another discard report according to some embodiments of this application;
FIG. 24 is a schematic diagram of another discard report according to some embodiments of this application;
FIG. 25 is a schematic diagram of another discard report according to some embodiments of this application;
FIG. 26 is a schematic diagram of another discard report according to some embodiments of this application;
FIG. 27 is a schematic diagram of another discard report according to some embodiments of this application;
FIG. 28 is a schematic diagram of another discard report according to some embodiments of this application;
FIG. 29 is a schematic diagram of another discard report according to some embodiments of this application;
FIG. 30 is a schematic diagram of another discard report according to some embodiments of this application;
FIG. 31 is a schematic diagram of another discard report according to some embodiments of this application;
FIG. 32 is a schematic diagram of another discard report according to some embodiments of this application;
FIG. 33 is a schematic diagram of a communication method according to some embodiments of this application;
FIG. 34 is a schematic diagram of a system architecture according to some embodiments of this application; and
FIG. 35 is a schematic structural diagram of a transmitter device according to some embodiments of this application.

### DESCRIPTION OF EMBODIMENTS

The following terms "first" and "second" are used merely for the purpose of description, and shall not be construed as indicating or implying relative importance or implicitly indicating a quantity of indicated technical features. Therefore, features defined by "first" and "second" may explicitly or implicitly include one or more such features.

Reference to "one embodiment", "some embodiments", or the like described in this specification means that one or more embodiments of this application include a specific feature, structure, or characteristic described with reference to the one or more embodiments. Therefore, statements "in one embodiment", "in some embodiments", "in some other embodiments", "in some additional embodiments", and the like that appear in different parts of this specification do not necessarily refer to the same embodiment, but mean "one or more but not all embodiments", unless otherwise specifically emphasized in another manner. Terms "include", "comprise", "have", and variants thereof all mean "include but are not limited to", unless otherwise specifically emphasized in another manner.

To facilitate understanding of a communication method provided in this application, concepts or terms that may be used in the following embodiments are first described.

### 1. Protocol data unit set

According to an SA definition, a protocol data unit set may be used as a data unit in a data transmission process. A protocol data unit set includes one or more data packets, and each data packet may carry a payload that forms an information unit. An application layer of a receive end may obtain a complete information unit such as information corresponding to a video frame or a picture frame based on payloads carried by all protocol data units (protocol data units, PDUs) in a protocol data unit set. In embodiments of this application, a data unit may include a frame and a video slice. The frame may be understood as a carrier for transmitting data, and the video slice may be understood as a data unit of a specific type in a video service. From a perspective of the carrier for transmitting data, in some cases, one protocol data unit set may correspond to one frame; and from a perspective of a type of transmitted data, in some cases, in the video service, data carried by one protocol data unit set may correspond to one video slice.

In general, the application layer of the receive end needs to receive all data packets in a protocol data unit set to obtain a complete information unit, and discarding one or more data packets may result in the receive end not being capable of obtaining the entire information unit. However, in some cases, the application layer of the receive end may further calculate data of the discarded part based on data of obtained PDUs by using some algorithms, so that even if some (for example, a small quantity of or less important) PDUs are discarded, the application layer of the receive end can still recover all or a part of the information unit.

A concept of the PDU set is proposed in the SA, and is defined as follows:
PDU Set: A PDU Set is composed of one or more PDUs carrying the payload of one unit of information generated at the application level (e.g. a frame or video slice for XRM Services, as used in TR26.926[27]). In some implementations all PDUs in a PDU Set are needed by the application layer to use the corresponding unit of information. In other implementations, the application layer can still recover parts all or of the information unit, when some PDUs are missing. That is, a PDU set includes one or more PDUs, and the PDUs carry payloads of an information unit such as a frame or a video slice generated at an application layer. It is noted in the foregoing definition that, in some implementations, the application layer needs to receive all the PDUs in the PDU set to obtain the information unit; and in another implementation, when some PDUs are discarded, the application layer may still recover all or a part of the information unit.

A protocol data unit set may be used as a data unit, and may specifically correspond to a frame or a video slice. A protocol data unit set includes a plurality of data packets, each data packet has a sequence number (such as a PDU SN) different from those of other data packets, and payloads carried in the plurality of data packets may constitute an information unit (such as a video frame or a picture). Different protocol data unit sets may be set to different importance levels, a protocol data unit set with a high importance level may be used, for example, for transmission of a frame with high importance, and a protocol data unit set with a low importance level may be used, for example, for transmission of a frame with low importance. In this way, frames of different importance are transmitted separately for subsequent differential processing on these frames.

For a same group of payloads, data packets divided at different layers may be different, and quantities and sequence numbers of data packets at different layers are also different. For ease of description, in the following embodiments, a sequence number of a data packet (for example, an RLC SDU or an RLC PDU) at an RLC layer is referred to as an RLC SN, and a sequence number of a data packet (for example, a PDCP SDU or a PDCP PDU) at a PDCP layer is referred to as a PDCP SN.

### 2. User plane protocol architecture

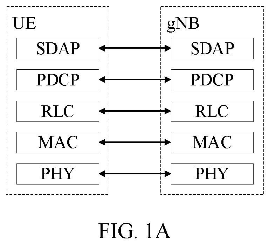

Refer to FIG. 1A. A user plane protocol architecture may include a service data adaptation protocol (service data adaptation protocol, SDAP) layer, a packet data convergence protocol (packet data convergence protocol, PDCP) layer, a radio link layer control protocol (radio link control, RLC) layer, a media access control (medium access control, MAC) layer, and a physical layer.

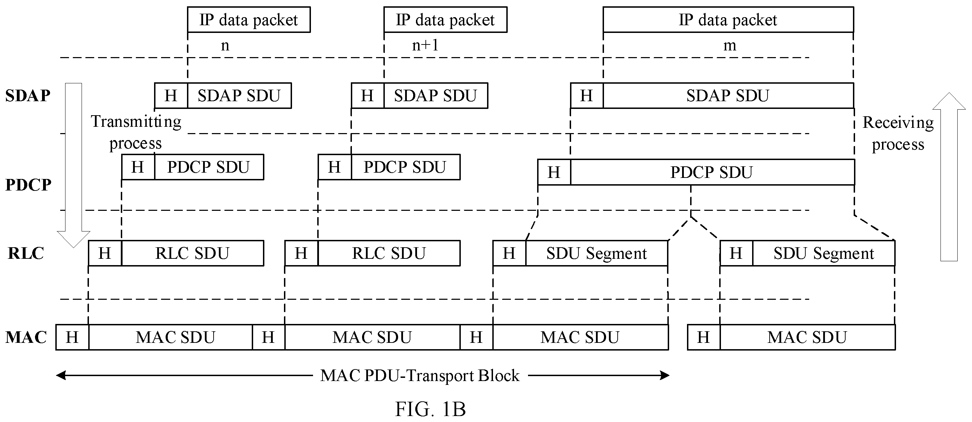

Refer to FIG. 1B. Based on the user plane protocol architecture in FIG. 1A, a process in which a transmit end transmits a data packet of a protocol data unit set to a receive end may include: The SDAP layer obtains an IP data packet transmitted by an upper layer (an application layer or a transport layer) of the SDAP layer, performs radio bearer (radio bearer, RB) processing on the basis of the IP data packet, and generates a data packet including a header (header) and an entity part SDAP SDU (that is, a payload). The data packet may be marked as an SDAP PDU data packet. Then, the SDAP layer transmits the SDAP PDU data packet to the PDCP layer. After obtaining the SDAP PDU data packet, the PDCP layer processes the data packet according to a PDCP protocol, and generates a data packet including a header H and an entity part PDCP SDU (including the SDAP SDU and the header of the SDAP layer). The data packet may be marked as a PDCP PDU data packet. Then, the PDCP layer further transmits the PDCP PDU data packet to the RLC layer. After obtaining the PDCP PDU data packet, the RLC layer processes the PDCP PDU data packet according to an RLC protocol, and generates a data packet including a header H and an entity part RLC SDU (including the PDCP SDU and the header of the PDCP layer). The data packet may be marked as an RLC PDU data packet. Then, the RLC layer further transmits the RLC PDU data packet to the MAC layer. After obtaining the RLC PDU data packet, the MAC layer processes the RLC PDU data packet according to a MAC protocol, and generates a data packet including a header H and an entity part MAC SDU (including the RLC SDU and the header of the RLC layer). The data packet may be marked as a MAC PDU data packet.

Based on the process, the MAC layer may obtain a plurality of MAC PDU data packets corresponding to a data unit, and based on the MAC PDU data packets, the MAC may finally obtain a MAC PDU transport block (MAC PDU transport block) including the plurality of data packets. Then, the MAC layer may transmit the generated MAC PDU transport block to the receive end by using air interface resources.

After receiving the protocol data unit, the receive end may parse the protocol data unit based on an inverse process of generating the protocol data unit, so that an application layer of the receive end can obtain, based on a parsing result, data carried by all PDUs in the protocol data unit set, and obtain an information unit based on payloads carried by all the PDUs. A specific manner and a process in which the receive end parses the data in the protocol data unit set may be set according to a related protocol or an actual requirement.

### 3. Control plane protocol architecture

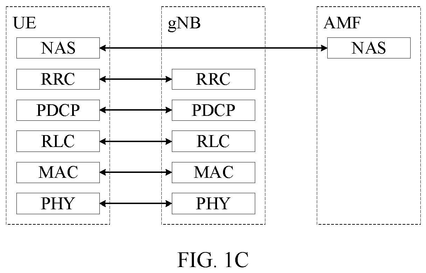

Refer to FIG. 1C. In a control plane protocol framework, a UE side may include a non-access stratum (non-access stratum, NAS), a radio resource control (radio resource control, RRC) layer, a PDCP layer, an RLC layer, a MAC layer, and a PHY layer; a gNB side may include an RRC layer, a PDCP layer, an RLC layer, a MAC layer, and a PHY layer; and an access and mobility management function (access and mobility management function, AMF) side may include a NAS layer.

The NAS layer may be used for a mobility and session management procedure of UE to set up and maintain an IP connection between the UE and a PDN GW.

Main services and functions of the RRC layer include broadcasting broadcast system information of the non-access stratum (NAS) related to system information, paging, setup, maintenance, and release of RRC connections between UE and an E-UTRAN that are related to an access stratum (AS), security functions including key management, setup, configuration, maintenance, and release of point-to-point radio bearers, broadcasting system messages of the NAS and the AS, a paging function, setup, maintenance, and release of RRC connections, setup, modification, and release of end-to-end radio bearers, and mobility management including UE measurement reporting, cell handover, and UE cell selection and reselection. An RRC layer protocol is terminated by an eNodeB.

The PDCP layer may be used to send or receive packet data of a peer PDCP entity. For example, the PDCP layer may compress and decompress an IP packet header, encrypt data and signaling, and perform integrity protection of signaling.

The RLC layer is used for segmentation and connection, error correction, retransmission processing, and sequential transmission of higher-layer data. The RLC layer has three modes: a transparent mode (transparent mode, TM), an unacknowledged mode (unacknowledged mode, UM), and an acknowledged mode (acknowledged mode, AM). The AM mode may be used for a transmission control protocol (transmission control protocol, TCP) service, such as file transfer. The UM mode may be used by a higher layer to provide sequential data transmission. The TM mode may be used for a special purpose, such as random access.

The MAC layer is used to perform mapping between a logical channel and a transmission channel, perform scheduling and priority allocation for the logical channel based on quality of service (quality of service, QoS), and process adaptive automatic repeat request (hybrid automatic repeat request, HARQ) retransmission and uplink and downlink scheduling.

The PHY layer is used to process encoding and decoding, modulation and demodulation, multi-antenna mapping, and another telecommunication physical layer function.

### 4. L2 data transmission protocol architecture

### (1) Downlink data transmission

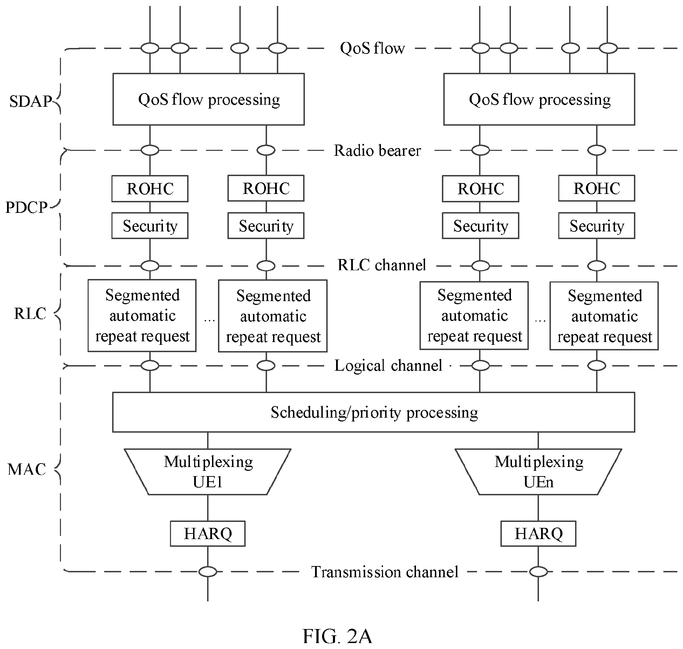

Refer to FIG. 2A. In a process in which a network side transmits data to a terminal side, an SDAP layer on the network side obtains data transmitted by an upper layer (an application layer or a transport layer) of the SDAP layer, maps the obtained data to a corresponding QoS flow based on a QoS requirement, and performs QoS flow processing on the QoS flow, for example, allocates a unique identifier to each QoS flow, and creates, modifies, and deletes the QoS flow. Then, the SDAP layer transmits processed data to a PDCP layer by using a radio bearer. Then, the PDCP layer performs bearer robust header compression (robust header compression, ROHC) processing (for example, compression and decompression of an IP packet header) and security (security) processing (for example, encryption and decryption) on the data from the SDAP layer, and transmits processed data to an RLC layer through an RLC channel. Then, the RLC layer checks and corrects error transmission by using a segmented automatic repeat request (segmented automatic repeat request, Segm ARQ) mechanism, and transmits the data to a MAC layer through a logical channel. Then, the MAC layer multiplexes data from a plurality of RLC entities onto a same physical channel, schedules the data based on priorities and available resources to ensure that high-priority data is transmitted in time, and performs error detection and correction by using a HARQ mechanism to avoid a transmission error. Then, the MAC layer transmits data from the RLC layer to a PHY layer through a transmission channel, and transmits the data to the terminal side via the PHY layer.

### (2) Uplink data transmission

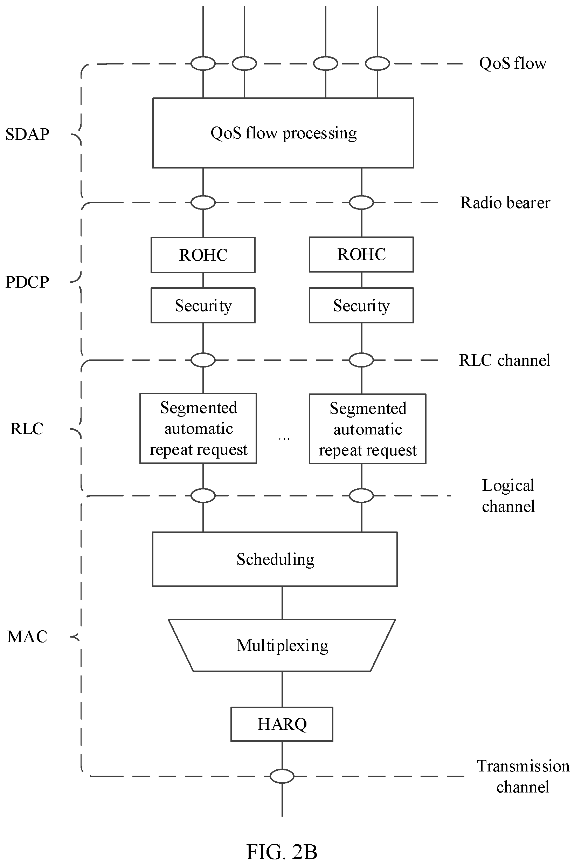

Refer to FIG. 2B. In a process in which a terminal side transmits data to a network side, an SDAP layer of UE obtains data transmitted by an upper layer (an application layer or a transport layer) of the SDAP layer, maps the obtained data to a corresponding QoS flow based on a QoS requirement, and performs QoS flow processing on the QoS flow, for example, allocates a unique identifier to each QoS flow, and creates, modifies, and deletes the QoS flow. Then, the SDAP layer transmits processed data to a PDCP layer by using a radio bearer. Then, the PDCP layer performs bearer robust header compression (robust header compression, ROHC) processing (for example, compression and decompression of an IP packet header) and security (Security) processing (for example, encryption and decryption) on the data from the SDAP layer, and transmits processed data to an RLC layer through an RLC channel. Then, the RLC layer checks and corrects error transmission by using a segmented automatic repeat request mechanism, and transmits the data to a MAC layer through a logical channel. Then, the MAC layer multiplexes data from the RLC layer onto a same physical channel, schedules the data based on priorities and available resources to ensure that high-priority data is transmitted in time, and performs error detection and correction by using a HARQ mechanism to avoid a transmission error. Then, the MAC layer transmits data from the RLC layer to a PHY layer through a transmission channel, and transmits the data to the network side via the PHY layer.

### 5. Discarding mechanism of a PDU set

### (1) Discarding procedure at an RLC layer

When indicated from upper layer (e.g. PDCP) to discard a particular RLC SDU, the transmitting side of an AM RLC entity or the transmitting UM RLC entity shall discard the indicated RLC SDU, if neither the RLC SDU nor a segment thereof has been submitted to the lower layers. The transmitting side of an AM RLC entity shall not introduce an RLC SN gap when discarding an RLC SDU. That is, when a PDCP layer indicates to discard a specific RLC SDU, a transmitting side of an AM RLC entity or a transmitting side of an UM RLC entity discard the indicated RLC SDU, where the RLC SDU or a segment of the RLC SDU is not submitted to a lower layer.

### (2) Discarding procedure at a PDCP layer

When the PDCP layer receives a data packet from a higher layer, the PDCP layer starts a discarding timer, and when the discarding timer expires, that is, discarding timing arrives at preset discarding time, the data packet is discarded. When the PDCP layer receives a data packet from a higher layer, the PDCP layer starts a discarding timer, and when the discarding timer expires and discarding of the PDU set is configured, all data packets of the PDU set are discarded.

### 4. Receiving window

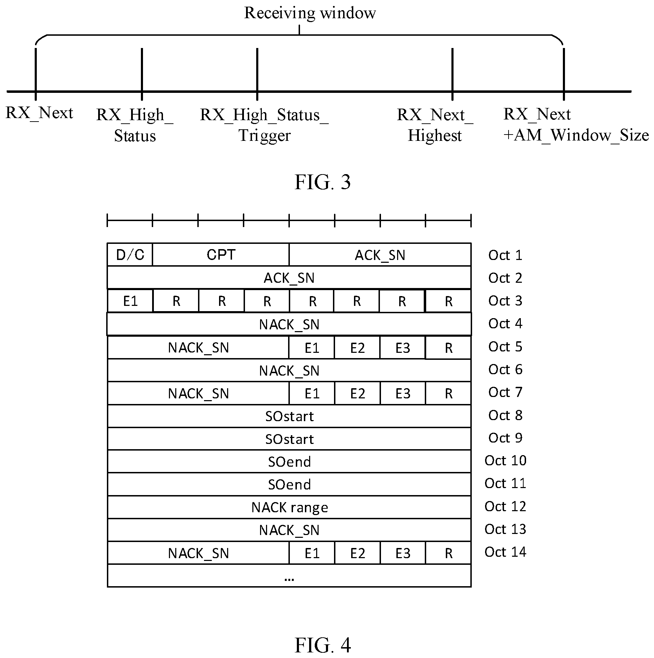

Refer to FIG. 3. Status parameters of the receiving window may include but are not limited to: RX_Next, RX_Next_Highest, AM_Window_Size, RX_Highest_Status, and RX_Next_Status_Trigger. RX_Next: This state variable holds the value of the SN following the last in-sequence completely received RLC SDU, and it serves as the lower edge of the receiving window. It is initially set to 0, and is updated whenever the AM RLC entity receives an RLC SDU with SN = RX_Next.

The RX_Next state variable is an SN next to an SN of a latest completely received RLC SDU in sequence, and is a lower edge of the receiving window. Provided that an AM RLC entity receives a data packet whose SN is RX_Next, the state variable is updated.

It may also be understood as that RX_Next is an RLC SN of a next to-be-received RLC SDU, where each RLC SDU corresponding to an RLC SN less than a value of RX_Next has been completely received, and is a lower edge of the receiving window. If an RLC SN of an RLC SDU received by an AM RLC entity is the same as RX_Next, RX_Next may be updated. An upper edge of the receiving window is RX_Next+AM_Window_Size.

RX_Next_Highest: This state variable holds the value of the SN following the SN of the RLC SDU with the highest SN among received RLC SDUs. It is initially set to 0.

The RX_Next_Highest state variable is an SN number next to an SN number of an RLC SDU with a highest SN of received RLC SDUs, that is, a largest value of RLC SNs of currently completely received RLC SDUs plus 1. An initial value of RX_Next_Highest is 0.

AM_Window_Size: Indicates a size of an AM window. When a 12-bit SN is used, the size is 2048. When an 18-bit SN is used, the size is 131072.

RX_Highest_Status: This state variable holds the highest possible value of the SN which can be indicated by "ACK_SN" when a STATUS PDU needs to be constructed. It is initially set to 0.

The RX_Highest_Status state variable is a highest possible SN number when a status PDU needs to be constructed, and the SN number may be indicated as "ACK_SN (acknowledgment feedback)".

It may also be understood as that RX_Highest_Status is a largest value of RLC SNs of RLC SDUs that have been completely received when a state report is sent, and is updated when a timer t-Reassembly expires or a received RLC SN is equal to the value. In other words, RX_Highest_Status may be a sequence number of a data packet next to a data packet latest completely received by a receive end.

RX_Next_Status_Trigger: This state variable holds the value of the SN following the SN of the RLC SDU which triggered t-Reassembly.

RX_Next_Status_Trigger is an SN next to an SN of an RLC SDU that triggers a reassembly timer,
and may also be understood as a value of RX_Next_Highest when the timer t-Reassembly expires.
t-Reassembly: The status parameter indicates a reassembly timer. A state report is sent when the timer expires, where actual timeout duration may depend on an implementation, and the timer is continuously started cyclically.
t-StatusProhibit: Indicates a timer for prohibiting sending of a state report. The timer is started after the state report is sent, and the state report can only be sent after the timer expires.

It should be understood that the status parameters of the receiving window may further include t-Reassembly, t-StatusProhibit, and the like. For details, refer to a related protocol. Details are not described herein.

### 5. State report

The state report is a control packet sent by a receive end to a transmit end, and is used to notify the transmit end of a data packet that is successfully received at the receive end or a data packet that is detected as lost.
(a) A state report at an RLC layer includes a state report payload and an RLC control PDU header. The RLC control PDU header includes a D/C field and a CPT field. The state report payload may include the following information.

### (1) ACK_SN field, occupying 12 or 18 bits.

The current protocol describes the ACK_SN field as follows:
The ACK_SN field indicates the SN of the next not received RLC SDU which is not reported as missing in the STATUS PDU. When the transmitting side of an AM RLC entity receives a STATUS PDU, it interprets that all RLC SDUs up to but not including the RLC SDU with SN = ACK_SN have been received by its peer AM RLC entity, excluding those RLC SDUs indicated in the STATUS PDU with NACK_SN, portions of RLC SDUs indicated in the STATUS PDU with NACK_SN, SOstart and SOend, RLC SDUs indicated in the STATUS PDU with NACK_SN and NACK_range, and portions of RLC SDUs indicated in the STATUS PDU with NACK_SN, NACK range, SOstart and SOend. That is, the ACK_SN field indicates an SN of a next RLC SDU that is not received, and the RLC SDU is not reported as lost in the state report. After the transmit end receives the state report, (1) RLC SDUs indicated with NACK_SN, (2) RLC SDUs indicated with NACK_SN, SOstart, and SOend, (3) RLC SDUs indicated with NACK_SN and NACK_range, and (4) RLC SDUs indicated with NACK_SN, NACK range, SOstart, and SOend in the state report are excluded.

In other words, after receiving the state report, the transmit end considers that all SDUs from a 1^{st} SDU to an SDU with ACK_SN-1 (excluding ACK_SN) have been correctly received, unless the state report clearly indicates that SDU information is lost or partially lost.

### (2) E1 field, occupying one bit.

The current protocol describes the E1 field as follows:
The E1 field indicates whether or not a set of NACK_SN, E1, E2 and E3 follows. The interpretation of the E1 field is provided in Table 6.2.3.11-1.

**Table 6.2.3.11-1: E1 field interpretation**

| Value | Description |
|---|---|
| 0 | A set of NACK_SN, E1, E2 and E3 does not follow. |
| 1 | A set of NACK_SN, E1, E2 and E3 follows. |

That is, the E1 field indicates whether a NACK_SN field, an E1 field, an E2 field, and an E3 field exist subsequently. When the value of the E1 field is 0, the E1 field indicates that the NACK_SN field, the E1 field, the E2 field, and the E3 field do not exist subsequently. When the value of the E1 field is 1, the E1 field indicates that the NACK_SN field, the E1 field, the E2 field, and the E3 field exist subsequently.

(3) NACK_SN field, occupying 12 or 18 bits.

The current protocol describes the NACK_SN field as follows:
The NACK_SN field indicates the SN of the RLC SDU (or RLC SDU segment) that has been detected as lost at the receiving side of the AM RLC entity.

That is, NACK_SN indicates that a corresponding SN of an RLC SDU (or an RLC SDU segment) that is detected as discarded at the receive end.

### (4) E2 field, occupying one bit.

The current protocol describes the E2 field as follows:
The E2 field indicates whether or not a set of SOstart and SOend follows. The interpretation of the E2 field is provided in Table 6.2.3.13-1.

**Table 6.2.3.13-1: E2 field interpretation**

| Value | Description |
|---|---|
| 0 | A set of SOstart and SOend does not follow for this NACK_SN. |
| 1 | A set of SOstart and SOend follows for this NACK_SN. |

That is, the E2 field indicates whether an SOstart field and an SOend field exist subsequently, that is, may indicate whether an RLC SDU segment is used. When the value of the E2 field is 0, the E2 field indicates that the SOstart field and the SOend field do not exist subsequently. When the value of the E2 field is 1, the E2 field indicates that the SOstart field and the SOend field exist subsequently.

### (5) SOstart field, occupying 16 bits.

The current protocol describes the SOstart field as follows:
The SOstart field (together with the SOend field) indicates the portion of the RLC SDU with SN = NACK_SN (the NACK_SN for which the SOstart is related to) that has been detected as lost at the receiving side of the AM RLC entity. Specifically, the SOstart field indicates the position of the first byte of the portion of the RLC SDU in bytes within the original RLC SDU. The first byte of the original RLC SDU is referred by the SOstart field value "0000000000000000", i.e., numbering starts at zero. That is, the SOstart field (together with an SOend field) indicates that a part (segment) of an RLC SDU with SN=NACK_SN is detected as discarded. The SOstart field indicates a position of a 1^{st} octet of an RLC SDU part in an original RLC SDU. That is, the 1^{st} octet of the original RLC SDU is 0000000000000000, that is, starts at zero.

### (6) SOend field, occupying 16 bits.

The current protocol describes the SOend field as follows:
Description 1: When E3 is 0, the SOend field (together with the SOstart field) indicates the portion of the RLC SDU with SN = NACK_SN (the NACK_SN for which the SOend is related to) that has been detected as lost at the receiving side of the AM RLC entity. Specifically, the SOend field indicates the position of the last byte of the portion of the RLC SDU in bytes within the original RLC SDU. The first byte of the original RLC SDU is referred by the SOend field value "0000000000000000", i.e., numbering starts at zero. The special SOend value "1111111111111111" is used to indicate that the missing portion of the RLC SDU includes all bytes to the last byte of the RLC SDU. That is, when a value of an E3 field is 0, the SOend field (together with an SOstart field) indicates a lost part of an RLC SDU whose sequence number is NACK_SN that is detected at a receive end of an AM RLC entity. Specifically, the SOend field indicates a position of a last octet of a lost part within an original RLC SDU in an octet coordinate system. A 1^{st} octet of the original RLC SDU is represented by a SOend field value 0000000000000000, that is, numbering is calculated from zero. In a special case, if a value of SOend is 1111111111111111, it indicates that a missing part of the RLC SDU includes all octets from the 1^{st} octet to the last octet.

In other words, when the value of the E3 field is 0, the SOend field (together with the SOstart field) indicates that a part (segment) of the RLC SDU whose SN is NACK_SN (SOend-related Soend) is detected as discarded. The SOend field indicates a position of a last octet of the RLC SDU part in the original RLC SDU.

Description 2: When E3 is 1, the SOend field indicates the portion of the RLC SDU with SN = NACK_SN + NACK range - 1 that has been detected as lost at the receiving side of the AM RLC entity. Specifically, the SOend field indicates the position of the last byte of the portion of the RLC SDU in bytes within the original RLC SDU. The first byte of the original RLC SDU is referred by the SOend field value "0000000000000000", i.e., numbering starts at zero. The special SOend value "1111111111111111" is used to indicate that the missing portion of the RLC SDU includes all bytes to the last byte of the RLC SDU. That is, when a value of an E3 field is 1, the SOend field indicates a lost part of an RLC SDU (service data unit) whose sequence number is NACK_SN+NACK range-1 that is detected at a receive end of an AM RLC entity. Specifically, the SOend field indicates a position of a last octet of a lost part within an original RLC SDU in an octet coordinate system. A 1^{st} octet of the original RLC SDU is represented by a SOend field value 0000000000000000, that is, numbering starts from zero. In a special case, if a value of SOend is 1111111111111111, it indicates that a missing part of the RLC SDU includes all octets from the 1^{st} octet to the last octet of the RLC SDU.

In other words, when the value of the E3 field is 1, the SOend field indicates that a part of the RLC SDU whose SN is NACK_SN+NACK range-1 is detected as lost.

### (7) E3 field, occupying 16 bits.

The current protocol describes the E3 field as follows:
The E3 field indicates whether or not information about a continuous sequence of RLC SDUs that have not been received follows. The interpretation of the E3 field is provided in Table 6.2.3.16-1.

**Table 6.2.3.16-1: E3 field interpretation**

| Value | Description |
|---|---|
| 0 | NACK range field does not follow for this NACK_SN. |
| 1 | NACK range field follows for this NACK_SN. |

That is, the E3 field indicates whether a continuous sequence of RLC SDUs that are not received exists. When a value of the E3 field is 0, the E3 field indicates that the continuous sequence of RLC SDUs that are not received does not exist. When a value of the E3 field is 1, the E3 field indicates that the continuous sequence of RLC SDUs that are not received exists.

### (8) NACK range field, occupying eight bits.

The current protocol describes the NACK range field as follows:
This NACK range field is the number of consecutively lost RLC SDUs starting from and including NACK_SN. The NACK range field indicates a quantity of consecutively lost RLC SDUs starting from NACK_SN.

### (9) CPT field, occupying three bits.

The current protocol describes the CPT field as follows:
The CPT field indicates the type of the RLC control PDU. The interpretation of the CPT field is provided in Table 6.2.3.9-1.

**Table 6.2.3.9-1: CPT field interpretation**

| Value | Description |
|---|---|
| 000 | STATUS PDU |
| 001-- | Reserved (PDUs with this coding will be discarded by the receiving entity for this release of the protocol) |

That is, a current value of the CPT field is 000, which indicates that the state report is a control packet.

For example, FIG. 4 shows a state report applied to the RLC layer when the ACK_SN field occupies 12 bits.

Refer to FIG. 4. The state report includes a D/C field, a CPT field, an ACK_SN field, NACK_SN fields, E1 fields, E2 fields, E3 fields, an SOstart field, an SOend field, and a NACK range field. Both the ACK_SN field and the NACK_SN field occupy 12 bits.

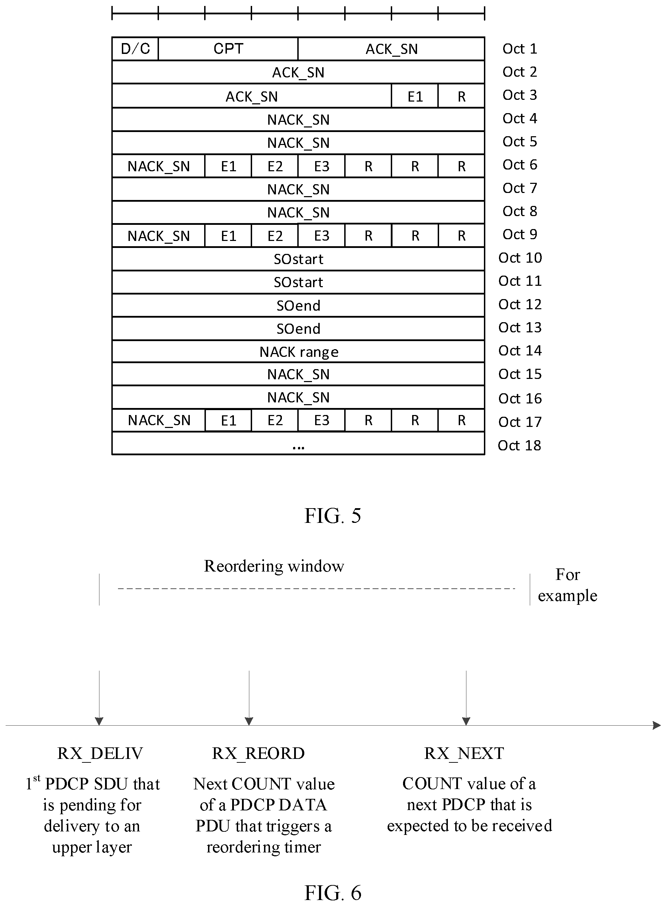

For example, FIG. 5 shows a state report applied to the RLC layer when the ACK_SN field occupies 18 bits.

Refer to FIG. 5. The state report includes a D/C field, a CPT field, an ACK_SN field, NACK_SN fields, E1 fields, E2 fields, E3 fields, an SOstart field, an SOend field, and a NACK range field. Both the ACK_SN field and the NACK_SN field occupy 18 bits.

(b) A state report at a PDCP layer includes a state report payload and a PDCP control PDU header. The PDCP control PDU header includes a D/C field and a PDU Type field. The state report payload may include the following information.

### (1) FMC field, occupying 32 bits; or FMS field, occupying 12 bits or 18 bits.

Corresponding to the PDCP layer, the FMC field indicates a COUNT value of a 1^{st} lost data packet. Corresponding to the RLC layer, the FMS field indicates a sequence number of a 1^{st} lost data packet.

The current protocol describes the CPT field as follows:
First Missing COUNT. This field indicates the COUNT value of the first missing PDCP SDU within the reordering window, i.e. RX_DELIV. That is, the field indicates a COUNT value of a 1^{st} lost data packet, to be specific, a COUNT value of a 1^{st} lost PDCP SDU in a reordering window.

Reordering window:
Refer to FIG. 6. The reordering window includes RX_DELIV (1^{st} PDCP SDU that is pending for delivery to a higher layer), RX_RECORD (next COUNT value of a PDCP ADTA PDU that triggers a reordering timer), and RX_NEXT (COUNT value of a next PDCP that is expected to be received).

When the 1^{st} PDCP SDU that is pending for delivery to the higher layer arrives, the reordering timer is triggered. The timer is used to wait for a specific time period for other data packets that may be lost or delayed. If no other data packets are received within the time period, it is considered that the data packets have been lost. Received data packets are directly delivered to an upper-layer application without waiting.

In addition, RX_NEXT indicates the COUNT value of the next data packet that is expected to be received. When a new data packet is received, a COUNT value of the new data packet is compared with RX_NEXT. If the COUNT value of the new data packet is greater than RX_NEXT, it indicates that the new data packet arrives in sequence and may be directly delivered. If the COUNT value of the new data packet is less than RX_NEXT, it indicates that the new data packet may be a previously lost data packet, and waiting for a specific time period is needed before deciding whether to deliver the data packet.

### (2) Bitmap field

The current protocol describes the Bitmap field as follows:
This field indicates which SDUs are missing and which SDUs are correctly received in the receiving PDCP entity. The bit position of N^{th} bit in the Bitmap is N, i.e., the bit position of the first bit in the Bitmap is 1. The interpretation of the Bitmap field is provided in Table 6.2.3.10-1.

**Table 6.3.10-1 Bitmap**

| Bit | Description |
|---|---|
| 0 | PDCP SDU with COUNT = (FMC + bit position) modulo 2³² is missing. |
| 1 | PDCP SDU with COUNT = (FMC + bit position) modulo 2³² is correctly received. |

That is, the Bitmap field indicates a lost SDU or a correctly received SDU in a receiving PDCP entity. A bit position of an N^{th} bit in the Bitmap is N, to be specific, a position of a 1^{st} bit in the Bitmap is 1.

It may be understood that the modulo 2³² is used to avoid a COUNT value rollover due to an excessively large COUNT value.

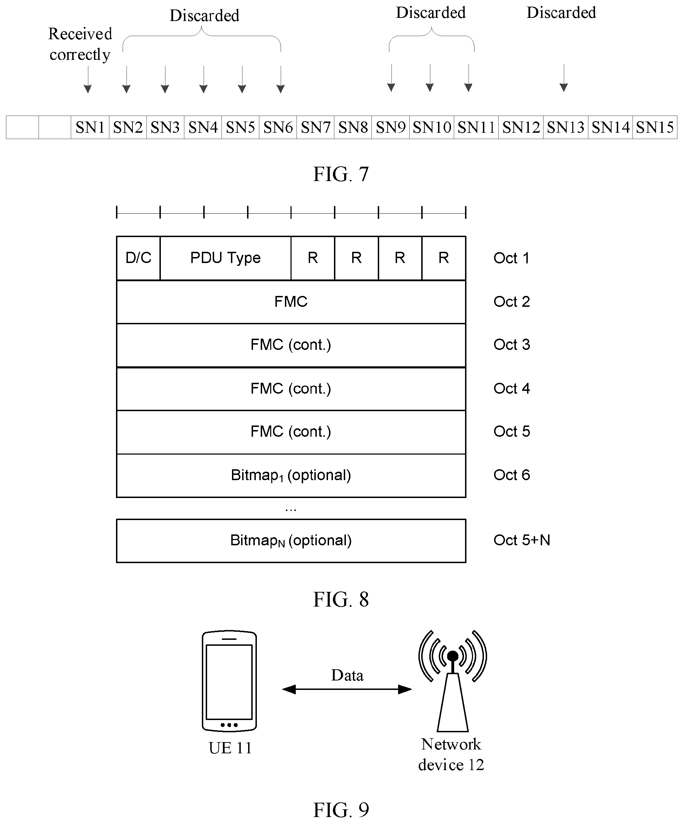

Refer to FIG. 7. An SDU of an SN1 is correctly received, and a value of a corresponding bit in the Bitmap is 0. SDUs of SN2 to SN6, SN9 to SN11, and SN13 are discarded, and values of corresponding bits in the Bitmap are 1.

For example, FIG. 8 shows a state report applied to the PDCP layer.

Refer to FIG. 8. The state report includes a D/C field, a PDU Type field, an FMC field, and a Bitmap field. The FMC field occupies four octets, and the Bitmap field occupies N octets. The state report may indicate, by using the FMC field and the Bitmap field, a plurality of data packets that are successfully received by the receive end or a plurality of data packets that are detected as lost at the receive end.

FIG. 9 shows an example application scenario of this application.

Refer to FIG. 9. After UE 11 is connected to a network device 12, the network device 12 may send data, for example, a video, a picture, a text, or a voice, to the UE 11, so that the UE 11 can perform communication services such as internet access, making a call, and sending or receiving an SMS message.

In some cases, in a process in which the network device 12 sends the data to the UE 11, the network device 12 may discard some data packets, for example, a data packet F, due to reasons such as network resource limitation, a network delay, service priority adjustment, and power consumption saving. However, because the UE 11 does not know that the data packet F has been discarded, the UE 11 pends for reception of the data packet F. In some embodiments, after pending for specific duration, the UE 11 may send a state report (state report, SR) to the network device 12, to indicate the network device 12 to retransmit the data packet F. However, the network device 12 has discarded the data packet F, and cannot retransmit the data packet F. Consequently, the UE 11 is in a pending state, and a deadlock of data transmission between the UE 11 and the network device 12 is caused.

In view of this, this application provides a communication method. In the method, in a process in which a transmit end sends data to a receive end, when the transmit end discards a part of data packets, the transmit end may send, to the receive end, a discard report indicating a discarded data packet, to notify, by using the discard report, the receive end of the data packet discarded by the transmit end, so that the receive end exits a pending state. In this way, a deadlock of data transmission between the transmit end and the receive end is avoided.

For example, after receiving the discard report sent by the transmit end, the receive end may update a lower edge of a receiving window based on the discard report, and after the lower edge of the receiving window of the transmit end is updated, the transmit end exits the pending state.

In some embodiments, the transmit end is UE, and the receive end is a network device. Alternatively, the transmit end is a network device, and the receive end is UE.

In some embodiments, the discarded data packet may be an SDU, or may be a PDU. This is not limited herein.

In some embodiments, the discarded data packet may be a data packet at an RLC layer, or may be a data packet at a PDCP layer, or may be a data packet at another layer. This is not limited herein.

For ease of understanding, the following describes information included in the discard report and a structure of the discard report.

### Information included in the discard report

In some embodiments, the discard report may include the following information:
first information, indicating the discarded data packet;
second information, indicating that the discard report is a control packet; and
third information, indicating that the discard report is a packet indicating the discarded data packet.

In some embodiments, the second information includes a D/C field, and occupies one bit. D represents a data packet, and C represents a control packet.

In some embodiments, when the D/C field is a first value (for example, 0), it indicates that the discard report is a data packet; or when the D/C field is a second value (for example, 1), it indicates that the discard report is a control packet. Usually, the discard report is a control packet. Therefore, a value of the D/C field is 1.

In some embodiments, the third information includes a CPT field or a PDU TYPE field, and occupies three bits. The CPT field indicates that the discard report is a packet that indicates a data packet discarded by the RLC layer. The PDU TYPE field indicates that the discard report is a packet that indicates a data packet discarded by the PDCP layer.

In some embodiments, the CPT field or the PDU TYPE field in the discard report is located after the D/C field. For example, the D/C field occupies a 0^{th} bit of a 0^{th} octet of the discard report. The CPT field or the PDU TYPE field occupies 1^{st} to 3^{rd} bits of the 0^{th} octet of the discard report.

In some embodiments, the first information may include one or more of the following information.

### (1) First field

The first field indicates an SN or a COUNT value of the discarded data packet.

In some embodiments, the first field may be a Discard_SN field or a Discard_COUNT field, or may be an FDS field or an FDC field.

The Discard_SN field may indicate an SN of each data packet of a data packet discarded by the RLC layer, or may indicate an SN of a 1^{st} data packet of consecutively discarded data packets or a separately discarded data packet of the data packet discarded by the RLC layer.

The Discard_COUNT field may indicate an SN of each data packet of a data packet discarded by the PDCP layer, or may indicate a COUNT value of a 1^{st} data packet of consecutively discarded data packets or a separately discarded data packet of the data packet discarded by the RLC layer.

The FDS field indicates an SN of a 1^{st} data packet of the data packet discarded by the RLC layer.

The FDC field indicates a COUNT value of a 1^{st} data packet of the data packet discarded by the PDCP layer.

In some embodiments, the Discard_SN field and the FDS field occupy 12 bits or 18 bits. The Discard_COUNT field and the FDC field occupy 32 bits.

In some embodiments, the data packet indicated by the first field is not transmitted to a lower layer (for example, not transmitted by the PDCP layer to the RLC layer, or not transmitted by the RLC layer to a MAC layer), or the data packet is not received or acknowledged.

### (2) Second field

The second field, or referred to as an S field, occupies one bit, and indicates whether consecutively discarded data packets exist.

In some embodiments, when the S field is the first value, it indicates that the consecutively discarded data packets exist subsequently; or when the S field is the second value, it indicates that the consecutively discarded data packets do not exist subsequently. The S field is described in the following Table 1.

**Table 1**

| Value | Description |
|---|---|
| 0 | range field does not follow for this Discard_SN or Discard_COUNT. |
| 1 | range field follows for this Discard_SN or Discard_COUNT. |

As shown in Table 1, when a value of the S field is 0 (used as an example of the first value), the range field (field indicating a quantity of consecutively discarded data packets) exists, and consecutive data packets are discarded; or when a value of the S field is 1 (used as an example of the second value), the range field does not exist, and one data packet (that is, a non-consecutive data packet) is discarded.

### (3) Third field

The third field, or referred to as a range field, occupies eight bits or ten bits, and indicates a quantity of consecutively discarded data packets.

### (4) Fourth field

The fourth field, or referred to as a number field, occupies four to eight bits, and indicates a quantity of pieces of discard information carried in the discard report, where one piece of discard information indicates one discarded data packet or a plurality of consecutively discarded data packets.

In some embodiments, when a value of the number field is N, it indicates that N+1 pieces of discard information exist subsequently, where N is a positive integer greater than or equal to 0. For example,
when the value of the number field is 0, it indicates that only one piece of discard information exists subsequently; when the value of the number field is 1, it indicates that two pieces of discard information exist subsequently; or when the value of the number field is 2, it indicates that three pieces of discard information exist subsequently.

### (5) Fifth field

The fifth field, or referred to as a P1 field, occupies one bit, and indicates whether discard information still exists.

It may be understood that the P1 field may indicate whether the following fields exist subsequently: a Discard_SN field, a Discard_COUNT field, an S field, and a range field.

### (6) Sixth field

The sixth field, or referred to as a Bitmap field, indicates a discard status of a data packet, where the discard status is "discarded" or "not discarded". Specifically, the Bitmap field indicates whether a data packet subsequent to the FDS field or the FDC field is discarded. In an implementation, for a definition of the Bitmap field, refer to the following table.

**Table 6.3.10-1 Bitmap**

| Bit | Description |
|---|---|
| 0 | PDCP SDU with COUNT = (FDC + bit position) modulo 2³² is discarded. |
| 1 | PDCP SDU with COUNT = (FDC + bit position) modulo 2³² is not discarded. |

**Table 6.3.10-1 Bitmap**

| Bit | Description |
|---|---|
| 0 | RLC SDU with SN = (FDS + bit position) modulo 2¹² (if the FDS includes 12 bits) or 2¹⁸ (if the FDS includes 18 bits) is discarded. |
| 1 | RLC SDU with SN = (FDS + bit position) modulo 2¹² (if the FDS includes 12 bits) or 2¹⁸ (if the FDS includes 18 bits) is not discarded. |

In another implementation, the modulo may not be performed in the foregoing table.

### (7) Seventh field

The seventh field, or referred to as a Length field, indicates a length of the sixth field, for example, a quantity of octets and a quantity of bits of the sixth field. For example, when a value of the Length field is 32, it indicates that Bitmap occupies 32 bits; or when a value of the Length field is 4, it indicates that Bitmap occupies four octets.

### (8) R bit

The R bit is used to fill in a bit that does not include valid information in the discard report. The R bit occupies one bit.

In some embodiments, combinations of fields included in the discard report include but are not limited to the following:
(a) a D/C field, a CPT field, and a Discard_SN field; or a D/C field, a PDU TYPE field, and a Discard_COUNT field.
(b) a D/C field, a CPT field, a Discard_SN field, an S field, and a range field; or a D/C field, a PDU TYPE field, a Discard_COUNT field, an S field, and a range field.
(c) a D/C field, a CPT field, an FDS field, and a Bitmap field; or a D/C field, a PDU TYPE field, an FDC field, and a Bitmap field.
(d) a D/C field, a CPT field, a Discard_SN field, an S field, a range field, and a number field; or a D/C field, a PDU TYPE field, a Discard_COUNT field, an S field, a range field, and a number field.
(e) a D/C field, a CPT field, a Discard_SN field, an S field, a range field, and a P1 field; or a D/C field, a PDU TYPE field, a Discard_COUNT field, an S field, a range field, and a P1 field.
(f) a D/C field, a CPT field, an FDS field, a Bitmap field, and a Length field; or a D/C field, a PDU TYPE field, an FDC field, a Bitmap field, and a Length field.

The following describes a specific structure of the discard report with reference to specific embodiments.

It should be noted that, in the following embodiments, the D/C field occupies a 0^{th} bit of the discard report, the CPT field occupies 1^{st} to 3^{rd} bits of the discard report, and the R bit occupies a bit that does not include valid information in the discard report.

It should be noted that sequence numbers of bits and octets of the discard report are encoded starting from 0. For example, if a length of the discard report is H octets, that is, 8H bits, the octets of the discard report are encoded as octets 0 to H-1, and the bits of the discard report are encoded as bits 0 to H-1. H is a positive integer.

It may be understood that the discard report may be a packet of a fixed size, or may be a packet of a non-fixed size. A discard report of a fixed size includes discard information for fixed data. A discard report of a non-fixed size includes a non-fixed amount of discard information. One piece of discard information indicates one discarded data packet or a plurality of pieces of consecutively discarded data. For example, one piece of discard information may include: one Discard_SN field; a Discard_COUNT field; one Discard_SN field, one S field, and one range field; one Discard_COUNT field, one S field, and one range field; one FDS field and one Bitmap field; one FDC field and one Bitmap field; or the like.

It may be understood that, for the discard report of the fixed size, when a quantity L1 of discard information used in the discard report is less than a fixed quantity L2 specified in the discard report, the discard report may use first L1 pieces of discard information to indicate a discarded data packet, and values of fields in last L2-L1 pieces of discard information in the discard report (for example, a Discard_SN field and a Discard_COUNT field) may be set to 0, where L1 and L2 are positive integers. For the discard report of the non-fixed size, if the discard report needs to use L3 pieces of discard information to indicate a discarded data packet, the discard report of the non-fixed size may include L3 pieces of discard information, where L3 is a positive integer.

### Fixed size

### [Implementation 1]

The discard report includes the following fields: a D/C field; a CPT field or a PDU TYPE field; and a Discard_SN field or a Discard_COUNT field.

The Discard_SN field or the Discard_COUNT field is used as the first information. The D/C field is used as the second information. The CPT field or the PDU TYPE field is used as the third information.

It may be understood that, when the discard report indicates, by only using the Discard_SN field, a data packet discarded by the RLC layer, each Discard_SN field in the discard report indicates an SN of each data packet of the data packet discarded by the RLC layer; or when the discard report indicates, by only using the Discard_COUNT field, a data packet discarded by the PDCP layer, each Discard_COUNT field in the discard report indicates a COUNT value of each data packet of the data packet discarded by the PDCP layer.

In some embodiments, the CPT field or the PDU TYPE field in the discard report is located after the D/C field.
(1) Corresponding to the RLC layer, the discard report includes the D/C field, the CPT field, and the Discard_SN field, and indicates the data packet discarded by the RLC layer.

In some embodiments, the Discard_SN field is located after the CPT field, and the CPT field is located after the D/C field.

In some embodiments, the discard report includes one D/C field, one CPT field, and M Discard_SN fields. First P Discard_SN fields of the M Discard_SN fields indicate P data packets discarded by the RLC layer. Both P and M are positive integers, and M≥P.

In some embodiments, the D/C field occupies a 0^{th} bit of the discard report. The CPT field occupies 1^{st} to 3^{rd} bits of the discard report. When the Discard_SN field occupies 12 bits, an i^{th} Discard_SN field occupies (12i-8)^{th} to (12i+3)^{th} bits of the discard report; or when the Discard_SN field occupies 18 bits, an i^{th} Discard_SN field occupies bits (18i-14)^{th} to (18i+3)^{th} bits of the discard report, where 1≤i≤M.

It may be understood that, in the first P Discard_SN fields in the discard report, a value of an m^{th} Discard_SN field is an SN of an m^{th} data packet discarded by the RLC layer, where 0≤m≤P. If a value of a Discard_SN field after the first P Discard_SN fields in the discard report is 0, it indicates that the Discard_SN field does not exist.

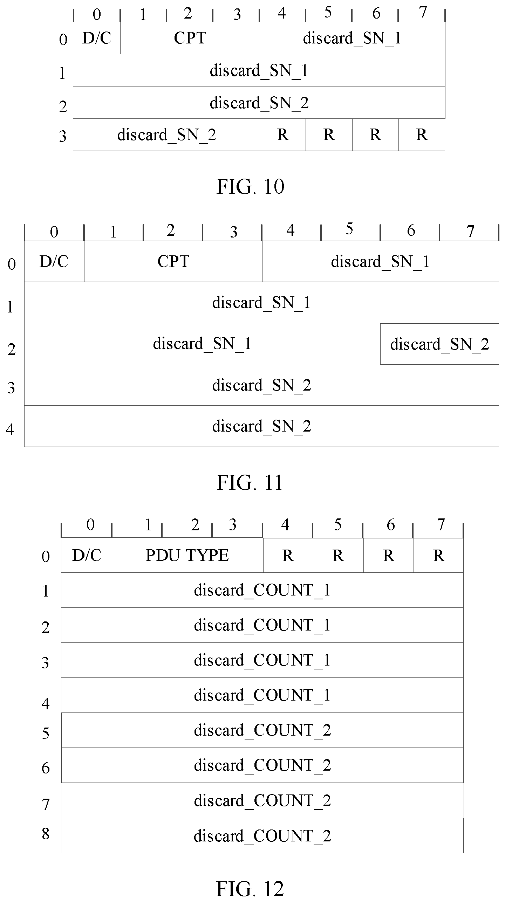

Refer to FIG. 10. For example, corresponding to M=2, the discard report includes two Discard_SN fields, that is, two pieces of discard information, and the Discard_SN field occupies 12 bits.

As shown in FIG. 10, the D/C field occupies a 0^{th} bit of the discard report, the CPT field occupies 1^{st} to 3^{rd} bits of the discard report, a 1^{st} Discard_SN field occupies 4^{th} to 7^{th} bits of the discard report and a 1^{st} octet of the discard report, and a 2^{nd} Discard_SN field occupies 16^{th} to 27^{th} bits of the discard report.

Refer to FIG. 11. For example, corresponding to M=2, the discard report includes two Discard_SN fields, that is, two pieces of discard information, and the Discard_SN field occupies 18 bits.

As shown in FIG. 11, the D/C field occupies a 0^{th} bit of the discard report, the CPT field occupies 1^{st} to 3^{rd} bits of the discard report, a 1^{st} Discard_SN field occupies 4^{th} to 21^{st} bits of the discard report, and a 2^{nd} Discard_SN field occupies 22^{nd} to 39^{th} bits of the discard report.

In some cases, corresponding to P=1, the RLC layer discards only one data packet. In this case, values of the 1^{st} Discard_SN fields in the discard reports shown in FIG. 10 and FIG. 11 are an SN of the data packet, and values of the 2^{nd} Discard_SN fields may be 0. Corresponding to P=1, the RLC layer discards two data packets. In this case, values of the 1^{st} Discard_SN fields in the discard reports are an SN of a 1^{st} discarded data packet, and values of the 2^{nd} Discard_SN fields are an SN of a 2^{nd} discarded data packet.

(2) Corresponding to the PDCP layer, the discard report includes the D/C field, the PDU TYPE field, and the Discard_COUNT field.

In some embodiments, the Discard_COUNT field is located after the CPT field, and the PDU TYPE field is located after the D/C field.

In some embodiments, the discard report includes one D/C field, one PDU TYPE field, and M Discard_COUNT fields. First P Discard_COUNT fields of the M Discard_COUNT fields indicate P data packets discarded by the PDCP layer.

In some embodiments, an i^{th} Discard_COUNT field occupies (32i-14)^{th} to (32i+8)^{th} bits of the discard report.

Refer to FIG. 12. For example, corresponding to M=2, the discard report includes two Discard_COUNT fields, that is, two pieces of discard information.

As shown in FIG. 12, the D/C field occupies a 0^{th} bit of the discard report. The PDU TYPE field occupies 1^{st} to 3^{rd} bits of the discard report. A 1^{st} Discard_COUNT field occupies 8^{th} to (8i+32)^{th} bits of the discard report.

It may be understood that, in first P Discard_COUNT fields in the discard report, a value of an m^{th} Discard_COUNT field is a COUNT value of an m^{th} data packet discarded by the PDCP layer. A value of a Discard_COUNT field after the first P Discard_COUNT fields in the discard report may be 0.

For example, for the discard report shown in FIG. 12, corresponding to P=1, the PDCP layer discards one data packet. In this case, a value of the 1^{st} Discard_COUNT field in the discard report is a COUNT value of a 1^{st} data packet discarded by the PDCP layer, and a value of a 2^{nd} Discard_COUNT field in the discard report may be 0, indicating that the field does not exist.

### [Implementation 2]

The discard report includes the following fields: a D/C field; a CPT field or a PDU TYPE field; a Discard_SN field or a Discard_COUNT field; an S field; and a range field.

The Discard_SN field or the Discard_COUNT field, the S field, and the range field are used as the first information. The D/C field is used as the second information. The CPT field or the PDU TYPE field is used as the third information.

It may be understood that, when the discard report indicates a discarded data packet by jointly using the Discard_SN field, the S field, and the range field, each Discard_SN field in the discard report indicates that an SN of a 1^{st} data packet of data packets consecutively discarded by the RLC layer or an SN of a separately discarded data packet.

It may be understood that, when the discard report indicates a discarded data packet by jointly using the Discard_COUNT field, the S field, and the range field, each Discard_COUNT field in the discard report indicates a COUNT value of a 1^{st} data packet of data packets consecutively discarded by the PDCP layer or a COUNT value of a separately discarded data packet.
(1) Corresponding to the RLC layer, the discard report includes the D/C field, the CPT field, the Discard_SN field, the S field, and the range field, and indicates a data packet discarded by the RLC layer.

In some embodiments, the discard report includes one D/C field, one CPT field, M Discard_SN fields, M S fields, and M range fields, that is, includes one D/C field, one CPT field, and M pieces of discard information. First J Discard_SN fields, first J S fields, and first J range fields in the discard report indicate J pieces of discard information, and the J pieces of discard information indicate J groups of data packets discarded by the RLC layer. One group of data packets of the J groups of data packets includes a group of a plurality of consecutively discarded data packets or one separately discarded data packet. J and M are positive integers, and J≥K.

It may be understood that values of a j^{th} Discard_SN field, a j^{th} S field, and a j^{th} range field in the first J pieces of discard information of the discard report are respectively values of a Discard_SN field, an S field, and a range field corresponding to a j^{th} data packet discarded by the RLC layer. Values of a Discard_SN field, an S field, and a range field in last M-J pieces of discard information of the discard report may be 0, indicating that the fields do not exist. j is a positive integer, and 1≤j≤J. When the Discard_SN field occupies 12 bits and the range field occupies ten bits:

In some embodiments, an i^{th} Discard_SN field occupies a (4i-3)^{th} octet and 0^{th} to 3^{rd} bits of a (4i-2)^{th} octet of the discard report, an i^{th} S field occupies any one of 4^{th} to 7^{th} bits of the (4i-2)^{th} octet of the discard report, and an i^{th} range field occupies a (4i-1)^{th} octet and 0^{th} to 1^{st} bits of a 4i^{th} octet of the discard report.

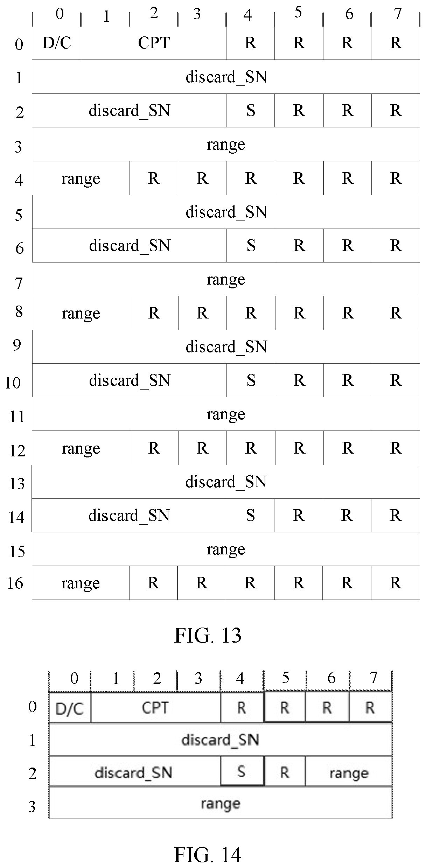

Refer to FIG. 13. For example, corresponding to M=4, the discard report includes four Discard_SN fields, four S fields, and four range fields.

As shown in FIG. 13, a 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies a 3^{rd} octet and 0^{th} to 1^{st} bits of a 4^{th} octet of the discard report.

A 2^{nd} Discard_SN field occupies a 5^{th} octet and 0^{th} to 3^{rd} bits of a 6^{th} octet of the discard report, a 2^{nd} S field occupies a 4^{th} bit of the 6^{th} octet of the discard report, and a 2^{nd} range field occupies a 7^{th} octet and 0^{th} to 1^{st} bits of an 8^{th} octet of the discard report.

A 3^{rd} Discard_SN field occupies a 9^{th} octet and 0^{th} to 3^{rd} bits of a 10^{th} octet of the discard report, a 3^{rd} S field occupies a 4^{th} bit of the 10^{th} octet of the discard report, and a 3^{rd} range field occupies an 11^{th} octet and 0^{th} to 1^{st} bits of a 12^{th} octet of the discard report.

A 4^{th} Discard_SN field occupies a 13^{th} octet and 0^{th} to 3^{rd} bits of a 14^{th} octet of the discard report, a 4^{th} S field occupies a 4^{th} bit of the 14^{th} octet of the discard report, and a 4^{th} range field occupies a 15^{th} octet and 0^{th} to 1^{st} bits of a 16^{th} octet of the discard report.

In some other embodiments, an i^{th} Discard_SN field occupies a (3i-2)^{th} octet and 0^{th} to 3^{rd} bits of a (3i-1)^{th} octet of the discard report, an i^{th} S field occupies a 4^{th} or 5^{th} bit of the (3i-1)^{th} octet of the discard report, and an i^{th} range field occupies 6^{th} to 7^{th} bits of the (3i-1)^{th} octet of the discard report and a 3i^{th} octet of the discard data report.

Refer to FIG. 14. For example, corresponding to M=1, the discard report includes one Discard_SN field, one S field, and one range field. A 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies 6^{th} to 7^{th} bits of the 2^{nd} octet of the discard report and a 3^{rd} octet of the discard report.

In some other embodiments, an i^{th} Discard_SN field occupies 4^{th} to 7^{th} bits of a (4i-4)^{th} octet and a (4i-3)^{th} octet of the discard report, an i^{th} S field occupies a 0^{th} bit of a (4i-2)^{th} octet of the discard report, and an i^{th} range field occupies 1^{st} to 7^{th} bits of the (4i-2)^{th} octet and 0^{th} to 2^{nd} bits of a (4i-1)^{th} octet of the discard report.

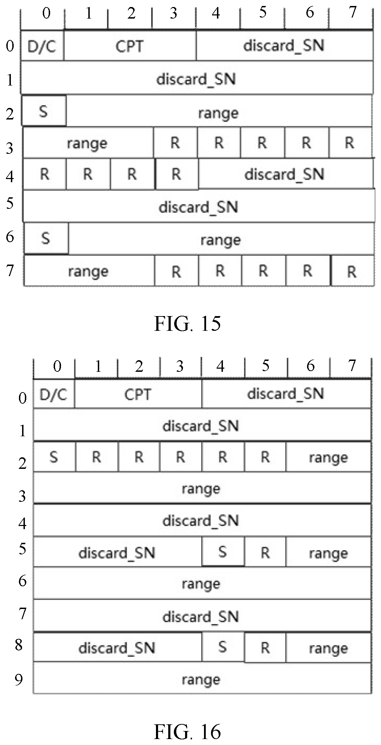

Refer to FIG. 15. For example, corresponding to M=2, the discard report includes two Discard_SN fields, two S fields, and two range fields. A 1^{st} Discard_SN field occupies 4^{th} to 7^{th} bits of a 0^{th} octet and a 1^{st} octet of the discard report, a 1^{st} S field occupies a 0^{th} bit of a 2^{nd} octet of the discard report, and a 1^{st} range field occupies 0^{th} to 7^{th} bits of the 2^{nd} octet and 0^{th} to 3^{rd} bits of a 3^{rd} octet of the discard report.

A 2^{nd} Discard_SN field occupies 4^{th} to 7^{th} bits of a 4^{th} octet and a 5^{th} octet of the discard report, a 2^{nd} S field occupies a 0^{th} bit of a 6^{th} octet of the discard report, and a 2^{nd} range field occupies 0^{th} to 2^{nd} bits of a 7^{th} octet of the discard report.

When the Discard_SN field occupies 12 bits, the range field occupies ten bits, and M is greater than 1:
In some embodiments, a 1^{st} Discard_SN field occupies 4^{th} to 7^{th} bits of a 0^{th} octet of the discard report and a 1^{st} octet of the discard report, and a (k+1)^{th} Discard_SN field occupies a (3k+1)^{th} octet and 0^{th} to 3^{rd} bits of a (3k+2)^{th} octet of the discard report. k is a positive integer, and 1≤k≤M-1.

A 1^{st} S field occupies any one of 0^{th} to 5^{th} bits of a 2^{nd} octet of the discard report, and a (k+1)^{th} S field occupies a 4^{th} or 5^{th} bit of the (3k+2)^{th} octet of the discard report.

A 1^{st} range field occupies 6^{th} to 7^{th} bits of the 2^{nd} octet of the discard report and a 3^{rd} octet of the discard report, and a (k+1)^{th} range field occupies 6^{th} to 7^{th} bits of a (3k-1)^{th} octet of the discard report and a 3k^{th} octet of the range field.

Refer to FIG. 16. For example, corresponding to M=3, the discard report includes three Discard_SN fields, three S fields, and three range fields. The 1^{st} Discard_SN field occupies 4^{th} to 7^{th} bits of a 0^{th} octet of the discard report and a 1^{st} octet of the discard report, the 1^{st} S field occupies a 0^{th} bit of a 2^{nd} octet of the discard report, and the 1^{st} range field occupies 6^{th} to 7^{th} bits of the 2^{nd} octet of the discard report and a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies 6^{th} to 7^{th} bits of the 5^{th} octet of the discard report and a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies 6^{th} to 7^{th} bits of the 8^{th} octet of the discard report and a 9^{th} octet of the discard report.

When the Discard_SN field occupies 18 bits and the range field occupies eight bits:
In some embodiments, an i^{th} Discard_SN field occupies a (4i-3)^{th} octet, a (4i-2)^{th} octet, and 0^{th} to 1^{st} bits of a (4i-1)^{th} octet of the discard report, an i^{th} S field occupies any one of 2^{nd} to 7^{th} bits of the (4i-1)^{th} octet of the discard report, and an i^{th} range field occupies a 4i^{th} octet of the discard report.

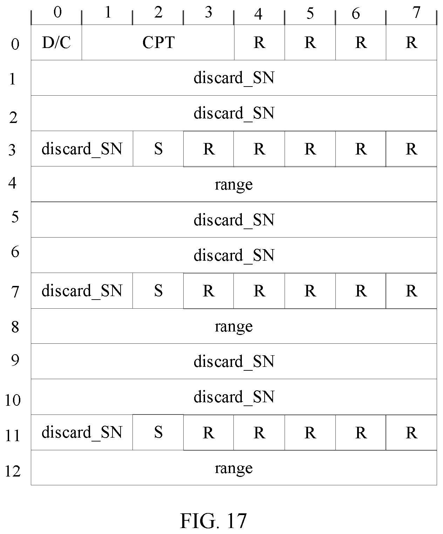

Refer to FIG. 17. For example, corresponding to M=3, the discard report includes three Discard_SN fields, three S fields, and three range fields.

As shown in FIG. 17, a 1^{st} Discard_SN field occupies a 1^{st} octet, a 2^{nd} octet, and 0^{th} to 1^{st} bits of a 3^{rd} octet of the discard report, a 1^{st} S field occupies a 2^{nd} bit of the 3^{rd} octet of the discard report, and a 1^{st} range field occupies a 4^{th} octet of the discard report.

A 2^{nd} Discard_SN field occupies a 5^{th} octet, a 6^{th} octet, and 0^{th} to 1^{st} bits of a 7^{th} octet of the discard report, a 1^{st} S field occupies a 2^{nd} bit of the 7^{th} octet of the discard report, and a 1^{st} range field occupies an 8^{th} octet of the discard report.

A 3^{rd} Discard_SN field occupies a 9^{th} octet, a 10^{th} octet, and 0^{th} to 1^{st} bits of an 11^{th} octet of the discard report, a 3^{rd} S field occupies a 2^{nd} bit of the 11^{th} octet of the discard report, and a 3^{rd} range field occupies a 12^{th} octet of the discard report.

(2) Corresponding to the PDCP layer, the discard report includes the D/C field, the PDU TYPE field, the Discard_COUNT field, the S field, and the range field, and indicates a data packet discarded by the PDCP layer.

In some embodiments, the discard report includes one D/C field, one PDU TYPE field, M Discard_COUNT fields, M S fields, and M range fields, that is, includes one D/C field, one PDU TYPE field, and M pieces of discard information. First J Discard_COUNT, first J S fields, and first J range fields in the discard report indicate J pieces of discard information, and the J pieces of discard information indicate J groups of data packets discarded by the PDCP layer. One group of data packets of the J groups of data packets includes a group of a plurality of consecutively discarded data packets or one separately discarded data packet. J and M are positive integers, and M≥J.

It may be understood that values of a j^{th} Discard_COUNT field, a j^{th} S field, and a j^{th} range field in the first J pieces of discard information of the discard report are respectively values of a Discard_COUNT field, an S field, and a range field corresponding to a j^{th} data packet discarded by the PDCP layer. Values of a Discard_COUNT field, an S field, and a range field in last M-J pieces of discard information of the discard report may be 0, indicating that the fields do not exist.

In some embodiments, when the range field occupies ten bits, an i^{th} Discard_COUNT field occupies (6i-5)^{th} to (6i-2)^{th} octets of the discard report, an i^{th} S field occupies any one of 0^{th} to 5^{th} bits of a (6i-1)^{th} octet of the discard report, and an i^{th} range field occupies 6^{th} to 7^{th} bits of the (6i-1)^{th} octet and a 6i^{th} octet of the discard report.

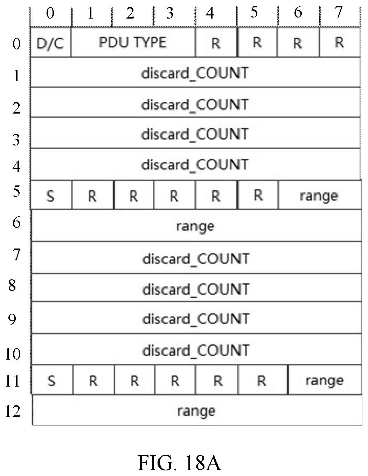

Refer to FIG. 18A. For example, corresponding to M=2, the discard report includes two Discard_COUNT fields, two S fields, and two range fields.

As shown in FIG. 18A, a 1^{st} Discard_COUNT field occupies 1^{st} to 4^{th} octets of the discard report, a 1^{st} S field occupies a 0^{th} bit of a 5^{th} octet of the discard report, and a 1^{st} range field occupies 6^{th} to 7^{th} bits of the 5^{th} octet and a 6^{th} octet of the discard report.

A 2^{nd} Discard_COUNT field occupies 7^{th} to 10^{th} octets of the discard report, a 2^{nd} S field occupies a 0^{th} bit of an 11^{th} octet of the discard report, and a 2^{nd} range field occupies 6^{th} to 7^{th} bits of the 11^{th} octet and a 12^{th} octet of the discard report.

In some other embodiments, when the range field occupies ten bits, an i^{th} Discard_COUNT field occupies (7i-6)^{th} to (7i-3)^{th} octets of the discard report, an i^{th} S field occupies any one of 0^{th} to 7^{th} bits of a (7i-2)^{th} octet of the discard report, and an i^{th} range field occupies a (7i-1)^{th} octet and 0^{th} to 1^{st} bits of a 7i^{th} octet of the discard report.

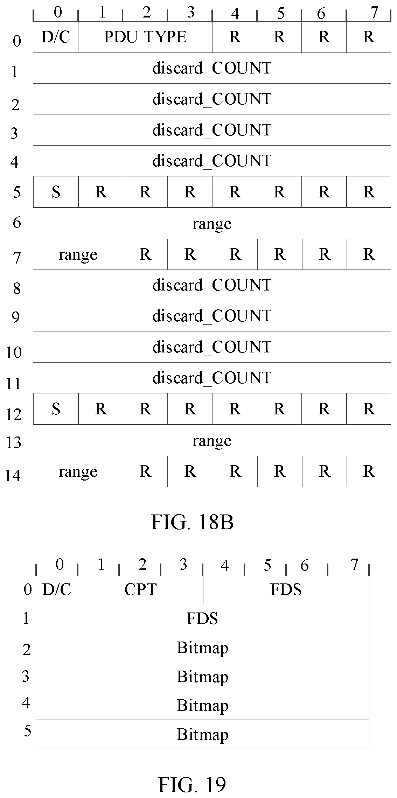

Refer to FIG. 18B. For example, corresponding to M=2, the discard report includes two Discard_COUNT fields, two S fields, and two range fields.

As shown in FIG. 18B, a 1^{st} Discard_COUNT field occupies 1^{st} to 4^{th} octets of the discard report, a 1^{st} S field occupies a 0^{th} bit of a 5^{th} octet of the discard report, and a 1^{st} range field occupies a 6^{th} octet and 6^{th} to 7^{th} bits of a 7^{th} octet of the discard report.

A 2^{nd} Discard_COUNT field occupies 8^{th} to 11^{th} octets of the discard report, a 2^{nd} S field occupies a 0^{th} bit of a 12^{th} octet of the discard report, and a 2^{nd} range field occupies a 13^{th} octet and 0^{th} to 1^{st} bits of a 14^{th} octet of the discard report.

### [Implementation 3]

The discard report includes the following fields: a D/C field; a CPT field or a PDU TYPE field; an FDS field or an FDC field; and a Bitmap field.

The Discard_SN field or the Discard_COUNT field and the FDS field or the FDC field are used as the first information. The D/C field is used as the second information. The CPT field or the PDU TYPE field is used as the third information.

The FDS field indicates an SN of a 1^{st} data packet of a data packet discarded by the RCL layer. The FDC field indicates a COUNT value of a 1^{st} data packet of a data packet discarded by the PDCP layer.

It may be understood that a length of the Bitmap field may be predefined. For example, the length of the Bitmap field may be defined as 32 bits, four octets, or the like. This is not limited.
(1) Corresponding to the RLC layer, the discard report includes the D/C field, the CPT field, the FDS field, and the Bitmap field, and indicates the data packet discarded by the RLC layer.

In some embodiments, when the FDS field occupies 12 bits and the length of the Bitmap field is Z (Z is a positive integer) octets, the FDS field occupies 4^{th} to 7^{th} bits of a 0^{th} octet and a 2^{nd} octet of the discard report, and the Bitmap field occupies 2^{nd} to (1+Z)^{th} octets of the discard report. Refer to FIG. 19. For example, when Z=4, the Bitmap field occupies 2^{nd} to 5^{th} octets of the discard report.

In some other embodiments, when the FDS field occupies 12 bits and the length of the Bitmap field is Y bits, the FDS field occupies 4^{th} to 7^{th} bits of a 0^{th} octet and a 2^{nd} octet of the discard report, and the Bitmap field occupies 16^{th} to (16+Y)^{th} bits of the discard report. For example, when Y=14, the Bitmap field occupies 16^{th} to 30^{th} bits of the discard report.

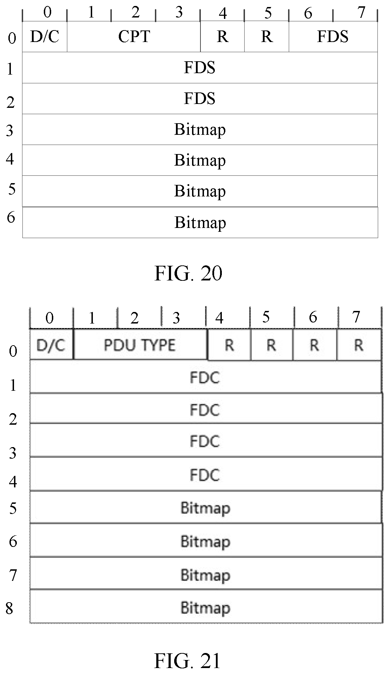

In some embodiments, when the FDS field occupies 18 bits and the Bitmap field occupies Z octets, the FDS field occupies 6^{th} to 7^{th} bits of a 0^{th} octet, a 1^{st} octet, and a 2^{nd} octet of the discard report, and the Bitmap field occupies 3^{rd} to (2+Z)^{th} octets of the discard report. Refer to FIG. 20. For example, when Z=4, the Bitmap field occupies 3^{rd} to 6^{th} octets of the discard report.

In some other embodiments, when the FDS field occupies 18 bits and the length of the Bitmap field is Y bits, the FDS field occupies 6^{th} to 7^{th} bits of a 0^{th} octet, a 1^{st} octet, and a 2^{nd} octet of the discard report, and the Bitmap field occupies 24^{th} to (24+Y)^{th} bits of the discard report. For example, when Y=14, the Bitmap field occupies 24^{th} to 38^{th} bits of the discard report.

(2) Corresponding to the PDCP layer, the discard report includes the D/C field, the CPT field, the FDC field, and the Bitmap field, and indicates the data packet discarded by the PDCP layer.

It may be understood that the Bitmap (four octets) may report whether 32 data packets in total are discarded. For example, each position of the Bitmap corresponds to one bit, the Bitmap has 32 positions, a 1^{st} position is 1 (a 2^{nd} position is 2), and a value of a bit corresponding to the position may be 0 or 1. A 1^{st} COUNT value after the FDC is the FDC plus the 1^{st} position of the Bitmap (plus 1). When the value of the bit corresponding to the position is 0, a data packet corresponding to FDC+1 is discarded; or when the value of the bit corresponding to the position corresponding to FDC+1 is 1, a data packet corresponding to FDC+1 is not discarded.

In some embodiments, when the Bitmap field occupies Z octets, the FDC field occupies 1^{st} to 4^{th} octets of the discard report, and the Bitmap field occupies 5^{th} to (4+Z)^{th} octets of the discard report. Refer to FIG. 21. For example, when X=4, the Bitmap field occupies 5^{th} to 8^{th} octets of the discard report.

In some other embodiments, when the length of the Bitmap field is Y bits, the FDC field occupies 1^{st} to 4^{th} octets of the discard report, and the Bitmap field occupies 40^{th} to (40+Y)^{th} bits of the discard report. For example, when Y=14, the Bitmap field occupies 40^{th} to 54^{th} bits of the discard report.

### Non-fixed size

### [Implementation 4]

The discard report includes the following fields: a D/C field; a CPT field or a PDU TYPE field; a Discard_SN field or a Discard_COUNT field; an S field; a range field; and a number field.

The number field is located before discard information (specifically, for example, the Discard_SN field or the Discard_COUNT field). When the number field is located before a 1^{st} piece of discard information, the number field indicates a quantity of pieces of discard information in the discard report. When the number field is located between a 1^{st} piece of discard information and a 2^{nd} piece of discard information, the number field indicates a quantity of pieces of discard information other than the 1^{st} piece of discard information.

The Discard_SN field or the Discard_COUNT field, the S field, the range field, and the number field are used as the first information. The D/C field is used as the second information. The CPT field or the PDU TYPE field is used as the third information.

The Discard_SN field indicates an SN of a 1^{st} data packet of data packets consecutively discarded by the RLC layer or an SN of a separately discarded data packet.

The Discard_COUNT field indicates a COUNT value of a 1^{st} data packet of data packets consecutively discarded by the PDCP layer or a COUNT value of a separately discarded data packet.
(1) Corresponding to the RLC layer, the discard report includes the D/C field, the CPT field, the Discard_SN field, the S field, the range field, and the number field, and indicates a data packet discarded by the RLC layer.

In some embodiments, the discard report includes one D/C field, one CPT field, M Discard_SN fields, M S fields, M range fields, and one number field.

In some embodiments, when the Discard_SN field occupies 12 bits, the range field occupies eight bits, and the number field occupies four bits:
The number field occupies 4^{th} to 7^{th} bits of a 0^{th} octet of the discard report.

An i^{th} Discard_SN field occupies a (3i-2)^{th} octet and 0^{th} to 3^{rd} bits of a (3i-1)^{th} octet of the discard report.

An i^{th} S field occupies any one of 4^{th} to 7^{th} bits of the (3i-1)^{th} octet of the discard report.

An i^{th} range field occupies a 3i^{th} octet of the discard report.

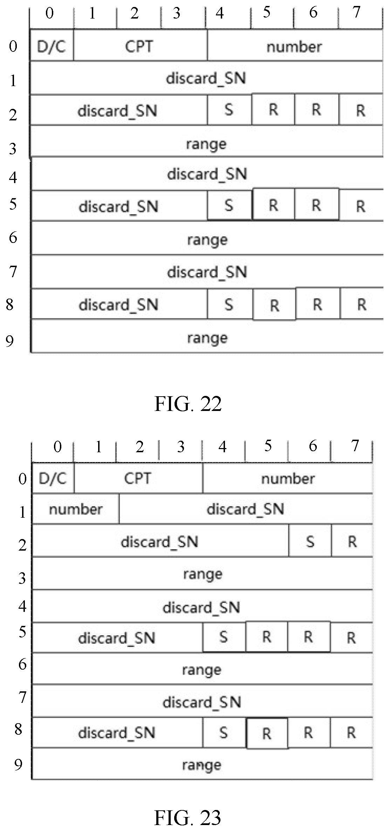

Refer to FIG. 22. For example, the discard report includes three Discard_SN fields, three S fields, and three range fields.

As shown in FIG. 22, a 1^{st} Discard_SN field occupies a 1^{st} octet and 0^{th} to 3^{rd} bits of a 2^{nd} octet of the discard report, a 1^{st} S field occupies a 4^{th} bit of the 2^{nd} octet of the discard report, and a 1^{st} range field occupies a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies a 9^{th} octet of the discard report.

In some embodiments, when the Discard_SN field occupies 12 bits, the range field occupies eight bits, the number field occupies six bits, and M is greater than 1:
The number field occupies 4^{th} to 7^{th} bits of a 0^{th} octet and 0^{th} to 1^{st} bits of a 1^{st} octet of the discard report.

A 1^{st} Discard_SN field occupies 2^{nd} to 7^{th} bits of a 1^{st} octet and 0^{th} to 5^{th} bits of a 2^{nd} octet of the discard report, and a (k+1)^{th} Discard_SN field occupies a (3k+1)^{th} octet and 0^{th} to 3^{rd} bits of a (3k+2)^{th} octet of the discard report.

A 1^{st} S field occupies a 6^{th} or 7^{th} bit of the 2^{nd} octet of the discard report, and a (k+1)^{th} S field occupies any one of 4^{th} to 7^{th} bits of the (3k+2)^{th} octet of the discard report.

A (k+1)th range field occupies a 3k^{th} octet of the discard report.

Refer to FIG. 23. For example, corresponding to M=3, the discard report includes three Discard_SN fields, three S fields, and three range fields.

As shown in FIG. 23, a 1^{st} Discard_SN field occupies 2^{nd} to 7^{th} bits of a 1^{st} octet and 0^{th} to 5^{th} bits of a 2^{nd} octet of the discard report, a 1^{st} S field occupies a 6^{th} bit of the 2^{nd} octet of the discard report, and a 1^{st} range field occupies a 3^{rd} octet of the discard report.

A 2^{nd} Discard_SN field occupies a 4^{th} octet and 0^{th} to 3^{rd} bits of a 5^{th} octet of the discard report, a 2^{nd} S field occupies a 4^{th} bit of the 5^{th} octet of the discard report, and a 2^{nd} range field occupies a 6^{th} octet of the discard report.

A 3^{rd} Discard_SN field occupies a 7^{th} octet and 0^{th} to 3^{rd} bits of an 8^{th} octet of the discard report, a 3^{rd} S field occupies a 4^{th} bit of the 8^{th} octet of the discard report, and a 3^{rd} range field occupies a 9^{th} octet of the discard report.

(2) Corresponding to the PDCP layer, the discard report includes the D/C field, the PDU TYPE field, the Discard_COUNT field, the S field, the range field, and the number field, and indicates a data packet discarded by the PDCP layer.

In some embodiments, the discard report includes one D/C field, one PDU TYPE field, M Discard_COUNT fields, M S fields, M range fields, and one number field.

In some embodiments, when the range field occupies eight bits and the number field occupies four bits:
The number field occupies 4^{th} to 7^{th} bits of a 0^{th} octet of the discard report.

An i^{th} Discard_COUNT field occupies (6i-5)^{th} to (6i-2)^{th} octets of the discard report.

An i^{th} S field occupies any one of 0^{th} to 8^{th} bits of a (6i-1)^{th} octet of the discard report.

An i^{th} range field occupies a 6i^{th} octet of the discard report.

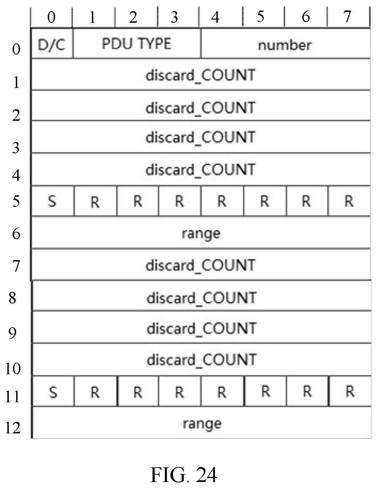

Refer to FIG. 24. For example, corresponding to M=2, the discard report includes two Discard_COUNT fields, two S fields, and two range fields.

As shown in FIG. 24, a 1^{st} Discard_COUNT field occupies 1^{st} to 4^{th} octets of the discard report, a 1^{st} S field occupies a 0^{th} bit of a 5^{th} octet of the discard report, and a 1^{st} range field occupies a 6^{th} octet of the discard report.

A 2^{nd} Discard_COUNT field occupies 7^{th} to 10^{th} octets of the discard report, a 2^{nd} S field occupies a 0^{th} bit of an 11^{th} octet of the discard report, and a 2^{nd} range field occupies a 12^{th} octet of the discard report.

When the range field occupies eight bits, the number field occupies six bits, and M is greater than 1:
The number field occupies 4^{th} to 7^{th} bits of a 0^{th} octet and 0^{th} to 1^{st} bits of a 1^{st} octet of the discard report.

A 1^{st} S field occupies any one of 2^{nd} to 7^{th} bits of the 1^{st} octet of the discard report, and a (k+1)^{th} S field occupies any one of 4^{th} to 7^{th} bits of a (6k+1)^{th} octet of the discard report.

A 1^{st} Discard_COUNT field occupies 2^{nd} to 5^{th} octets of the discard report, and a (k+1)^{th} Discard_COUNT field occupies (6k-4)^{th} to (6k-1)^{th} octets of the discard report.

A k^{th} range field occupies a 6k^{th} octet of the discard report.

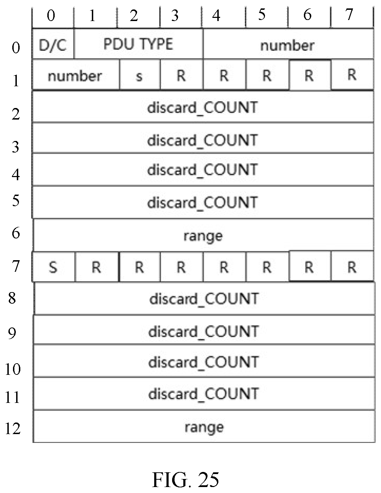

Refer to FIG. 25. For example, corresponding to M=2, the discard report includes two Discard_COUNT fields, two S fields, and two range fields.

As shown in FIG. 25, a 1^{st} S field occupies a 2^{nd} bit of a 1^{st} octet of the discard report, a 1^{st} Discard_COUNT field occupies 2^{nd} to 5^{th} octets of the discard report, and a 1^{st} range field occupies a 6^{th} octet of the discard report.

A 2^{nd} S field occupies a 0^{th} bit to a 7^{th} octet of the discard report, a 2^{nd} Discard_COUNT field occupies 8^{th} to 11^{th} octets of the discard report, and a 2^{nd} range field occupies a 12^{th} octet of the discard report.

### [Implementation 5]

The discard report includes the following fields: a D/C field; a CPT field or a PDU TYPE field; a Discard_SN field or a Discard_COUNT field; an S field; a range field; and a P1 field.

The Discard_SN field or the Discard_COUNT field, the S field, the range field, and the P1 field are used as the first information. The D/C field is used as the second information. The CPT field or the PDU TYPE field is used as the third information.

The Discard_SN field indicates an SN of a 1^{st} data packet of data packets consecutively discarded by the RLC layer or an SN of a separately discarded data packet.

The Discard_COUNT field indicates a COUNT value of a 1^{st} data packet of data packets consecutively discarded by the PDCP layer or a COUNT value of a separately discarded data packet.
(1) Corresponding to the RLC layer, the discard report includes the D/C field, the CPT field, the Discard_SN field, the S field, the range field, and the P1 field, and indicates a data packet discarded by the RLC layer.

In some embodiments, the discard report includes one D/C field, one CPT field, M Discard_SN fields, M S fields, M range fields, and M P1 fields.

In some embodiments, when the Discard_SN field occupies 18 bits and the range field occupies eight bits:
An i^{th} Discard_SN field occupies a (4i-3)^{th} octet, a (4i-2)^{th} octet, and 0^{th} to 1^{st} bits of a (4i-1)^{th} octet of the discard report.

An i^{th} P1 field occupies a 3^{rd} bit of the (4i-1)^{th} octet of the discard report.

An i^{th} S field occupies any one of 3^{rd} to 8^{th} bits of the (4i-1)^{th} octet of the discard report.

An i^{th} range field occupies a 4i^{th} octet of the discard report.

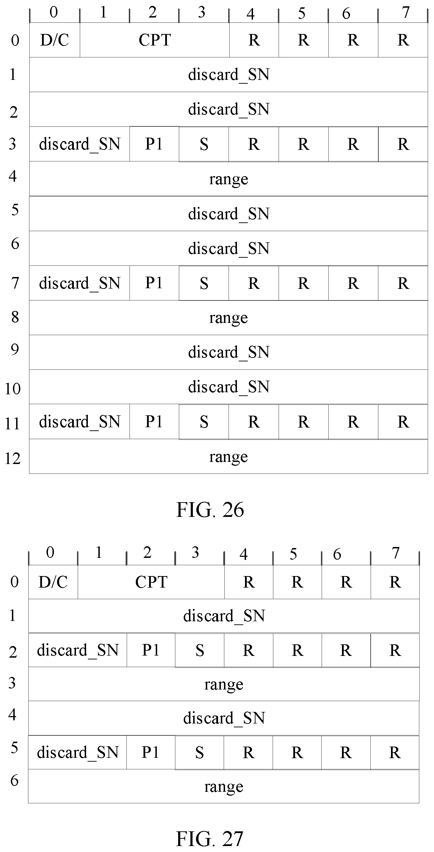

Refer to FIG. 26. For example, corresponding to M=3, the discard report includes three Discard_SN fields, three S fields, three range fields, and three P1 fields.

As shown in FIG. 26, a 1^{st} Discard_SN field occupies a 1^{st} octet, a 2^{nd} octet, and 0^{th} to 1^{st} bits of a 3^{rd} octet of the discard report, a 1^{st} P1 field occupies a 2^{nd} bit of the 3^{rd} octet of the discard report, a 1^{st} S field occupies a 3^{rd} bit of the 3^{rd} octet of the discard report, and a 1^{st} range field occupies a 4^{th} octet of the discard report.

A 2^{nd} Discard_SN field occupies a 5^{th} octet, a 6^{th} octet, and 0^{th} to 1^{st} bits of a 7^{th} octet of the discard report, a 2^{nd} P1 field occupies a 2^{nd} bit of the 7^{th} octet of the discard report, a 2^{nd} S field occupies a 3^{rd} bit of the 7^{th} octet of the discard report, and a 1^{st} range field occupies an 8^{th} octet of the discard report.

A 3^{rd} Discard_SN field occupies a 9^{th} octet, a 10^{th} octet, and 0^{th} to 1^{st} bits of an 11^{th} octet of the discard report, a 3^{rd} P1 field occupies a 2^{nd} bit of the 11^{th} octet of the discard report, a 3^{rd} S field occupies a 3^{rd} bit of the 11^{th} octet of the discard report, and a 3^{rd} range field occupies a 12^{th} octet of the discard report.

In some embodiments, when the Discard_SN field occupies 12 bits and the range field occupies eight bits:
An i^{th} Discard_SN field occupies a (3i-2)^{th} octet and 0^{th} to 1^{st} bits of a (3i-1)^{th} octet of the discard report.

An i^{th} P1 field occupies a 3^{rd} bit of the (3i-1)^{th} octet of the discard report.

An i^{th} S field occupies any one of 3^{rd} to 8^{th} bits of the (3i-1)^{th} octet of the discard report.

An i^{th} range field occupies a 3i^{th} octet of the discard report.

Refer to FIG. 27. For example, corresponding to M=2, the discard report includes two Discard_SN fields, two S fields, two range fields, and two P1 fields.

As shown in FIG. 27, a 1^{st} Discard_SN field occupies a 1^{st} octet and 0^{th} to 1^{st} bits of a 2^{nd} octet of the discard report, a 1^{st} P1 field occupies a 3^{rd} bit of the 2^{nd} octet of the discard report, a 1^{st} S field occupies a 3^{rd} bit of the 2^{nd} octet of the discard report, and a 1^{st} range field occupies a 3^{rd} octet of the discard report.

A 2^{nd} Discard_SN field occupies a 4^{th} octet and 0^{th} to 1^{st} bits of a 5^{th} octet of the discard report, a 2^{nd} P1 field occupies a 3^{rd} bit of the 5^{th} octet of the discard report, a 2^{nd} S field occupies a 3^{rd} bit of the 5^{th} octet of the discard report, and a 2^{nd} range field occupies a 6^{th} octet of the discard report.

(2) Corresponding to the PDCP layer, the discard report includes the D/C field, the PDU TYPE field, the Discard_COUNT field, the S field, the range field, and the P1 field, and indicates a data packet discarded by the PDCP layer.

In some embodiments, the discard report includes one D/C field, one PDU TYPE field, M Discard_COUNT fields, M S fields, M range fields, and M P1 fields.

In some embodiments, when the range field occupies eight bits:
An i^{th} Discard_COUNT field occupies (6i-5)^{th} to (6i-2)^{th} octets of the discard report.

An i^{th} P1 field occupies a 1^{st} bit of a (6i-1)^{th} octet of the discard report.

An i^{th} S field occupies any one of 1^{st} to 8^{th} bits of the (6i-1)^{th} octet of the discard report.

An i^{th} range field occupies a 6i^{th} octet of the discard report.

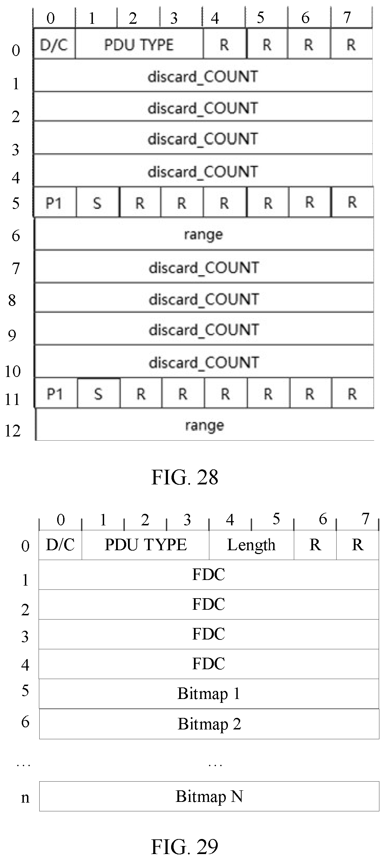

Refer to FIG. 28. For example, corresponding to M=2, the discard report includes two Discard_COUNT fields, two S fields, two range fields, and two P1 fields.

As shown in FIG. 28, a 1^{st} Discard_COUNT field occupies 1^{st} to 4^{th} octets of the discard report, a 1^{st} P1 field occupies a 0^{th} bit of a 5^{th} octet of the discard report, a 1^{st} S field occupies a 1^{st} bit of the 5^{th} octet of the discard report, and a 1^{st} range field occupies a 6^{th} octet of the discard report.

A 2^{nd} Discard_COUNT field occupies 7^{th} to 10^{th} octets of the discard report, a 2^{nd} P1 field occupies a 0^{th} bit of an 11^{th} octet of the discard report, a 2^{nd} S field occupies a 1^{st} bit of the 11^{th} octet of the discard report, and a 2^{nd} range field occupies a 12^{th} octet of the discard report.

### [Implementation 6]

The discard report includes the following fields: a D/C field; a CPT field or a PDU TYPE field; an FDS field or an FDC field; a Bitmap field; and a Length field.

The FDS field or the FDC field, the Bitmap field, and the Length field are used as the first information. The D/C field is used as the second information. The CPT field or the PDU TYPE field is used as the third information.
(1) Corresponding to the PDCP layer, the discard report includes the D/C field, the PDU TYPE field, the FDC field, the Bitmap field, and the Length field, and indicates a data packet discarded by the PDCP layer. In some embodiments, corresponding to the Length field occupying L bits, the Bitmap field occupying Z octets, and 8j+1≤L≤8j+4, where j is an integer greater than or equal to 0, the Length field occupies 4^{th} to (L+4)^{th} bits of the discard report, the FDC field occupies (j+1)^{th} to (j+4)^{th} octets of the discard report, and the Bitmap field occupies (j+5)^{th} to (j+5+Z)^{th} octets of the discard report. Corresponding to the Length field occupying L bits, the Bitmap field occupying Z octets, and 8j+5≤L≤8j+8, the Length field occupies 4^{th} to (L+4)^{th} bits of the discard report, the FDC field occupies (j+2)^{th} to (j+5)^{th} octets of the discard report, and the Bitmap field occupies (j+6)^{th} to (j+6+Z)^{th} octets of the discard report.

In some embodiments, when the Length field occupies two bits, and the Length field indicates that the Bitmap field occupies N octets, as shown in FIG. 29, the Length field occupies 4^{th} to 5^{th} bits of a 0^{th} octet of the discard report, and the FDC field occupies 1^{st} to 4^{th} octets of the discard report. When N is equal to 1, the Bitmap field occupies a 5^{th} octet of the discard report. When N is greater than 1, the Bitmap field occupies 5^{th} to (4+N)^{th} octets of the discard report.

(2) Corresponding to the RLC layer, the discard report includes the D/C field, the CPT field, the FDS field, the Bitmap field, and the Length field, and indicates a data packet discarded by the RLC layer.

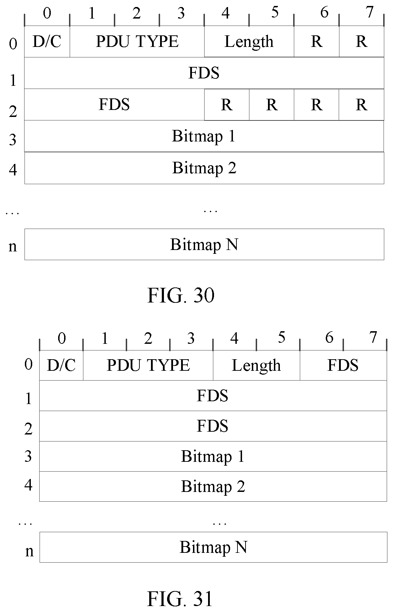

In some embodiments, when the Length field occupies two bits, the Length field indicates that the Bitmap field occupies N octets, and the FDS field occupies 12 bits, as shown in FIG. 30, the Length field occupies 4^{th} to 5^{th} bits of a 0^{th} octet of the discard report, and the FDS field occupies a 1^{st} octet and 0^{th} to 3^{rd} bits of a 2^{nd} octet of the discard report. When N is equal to 1, the Bitmap field occupies a 3^{rd} octet of the discard report. When N is greater than 1, the Bitmap field occupies 3^{rd} to (2+N)^{th} octets of the discard report.

In some other embodiments, when the Length field occupies two bits, the Length field indicates that the Bitmap field occupies N octets, and the FDS field occupies 18 bits, as shown in FIG. 31, the Length field occupies 4^{th} to 5^{th} bits of a 0^{th} octet of the discard report, and the FDS field occupies 6^{th} to 7^{th} bits of the 0^{th} octet of the discard report and a 1^{st} octet and a 2^{nd} octet of the discard report. When N is equal to 1, the Bitmap field occupies a 3^{th} octet of the discard report. When N is greater than 1, the Bitmap field occupies 3^{th} to (2+N)^{th} octets of the discard report.

The foregoing is discard reports defined in embodiments of this application. In some embodiments, a discard report indicating a discarded data packet may alternatively be constructed based on a state report defined in a current protocol. For example, a definition of a part of fields in the state report is added, or a structure of the state report is reused, to redefine a discard report.

In some implementations, new definitions may be added to some fields of the foregoing state report, so that a redefined state report may be used as a discard report, and may indicate a data packet discarded by the transmit end.

In some embodiments, when a value of a CPT field or a PDU Type field (used as an eighth field) in the state report is a first value, for example, 000, it indicates that the state report is a packet indicating a data packet successfully received by the receive end or a data packet detected as lost at the receive end; or when a value of a CPT field or a PDU Type field in the state report is a second value, for example, 001, the state report is used as a discard report, and indicates a discarded data packet.

The following describes definitions of fields in the state report when the CPT field or the PDU Type field in the state report is the second value.

When the CPT field (used as the eighth field) in the state report of the application RLC layer is the second value, other fields in the state report may be interpreted as the following newly added definitions.
(1) The ACK_SN field (used as a ninth field) indicates an SN following a largest SN in SNs of discarded data packets, for example, an SN next to the largest SN.
(2) The E1 field (used as a tenth field) indicates whether discard information exists subsequently.
(3) The NACK_SN field (used as an eleventh field) indicates a corresponding SN of a discarded data packet (RLC SDU or RLC segment).
(4) The E2 field (used as a twelfth field) may be 0 or an R bit, and does not include valid information.
(5) The SOstart field (used as a thirteenth field) does not exist, or the SOstart field (together with the SOend field) indicates that a part (segment) of an RLC SDU whose SN is NACK_SN is detected as discarded.
(6) The SOend field (used as a fourteenth field) does not exist, or the SOend field (together with the SOstart field) indicates that a part (segment) of an RLC SDU whose SN is NACK_SN (SOend-related NACK_SN) is detected as discarded.
(7) The E3 field (used as a fifteenth field) indicates whether consecutively discarded data packets exist.
(8) The NACK range (used as a sixteenth field) indicates a quantity of consecutively discarded data packets.

When the PDU Type field (used as a seventeenth field) in the state report is the second value, other fields in the state report may be interpreted as the following newly added definitions.
(1) Corresponding to the PDCP layer, the FMC field indicates a COUNT value of a 1^{st} discarded data packet. Alternatively, corresponding to the RLC layer, the FMS field (used as an eighteen field) indicates a sequence number of a 1^{st} discarded data packet.
(2) The Bitmap field (used as a nineteenth field) indicates a discard status of the data packet.

In the foregoing embodiment, after new definitions are added to the fields in the state report, when a value of the PCT field or the PDU Type field in the state report is the second value, the state report has a same function as the discard report. Therefore, the state report in which the value of the PCT field or the PDU Type field is the second value may be used as the discard report indicating the discarded data packet.

In some other embodiments, a basic structure of the state report may be reused to construct the discard report.

For example, ACK_SN fields in the state report shown in FIG. 4 may be replaced with first SN fields, where the first SN field indicates an SN following a largest SN in discarded data packets, for example, an SN next to the largest SN, and an initial value of the first SN field is 0. 5^{th} to 11^{th} octets in the state report are deleted, where the 5^{th} to 11^{th} octets include one NACK_SN field, one E1 field, one E2 field, one E3 field, one R bit, one SOstart field, and one SOend field.

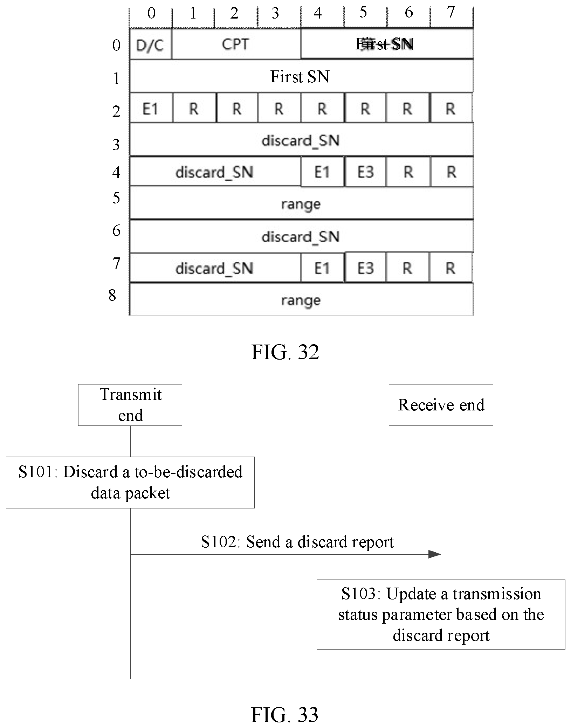

Then, a position of the NACK_SN field in the state report is replaced with a discard_SN field, and the discard_SN field indicates an SN of a discarded data packet. Then, the E3 field in the state report is replaced with an R bit, the E2 field in the state report is replaced with an E3 field, and an NACK range field in the state report is replaced with a range field, to obtain the discard report shown in FIG. 32.

FIG. 33 is a schematic diagram of an interaction procedure of a communication method according to some embodiments of this application. As shown in FIG. 33, the interaction procedure includes the following steps.

S101: A transmit end discards a to-be-discarded data packet.

In some embodiments, when determining that a data packet discard condition is met, the transmit end may discard the to-be-discarded data packet.

It may be understood that the to-be-discarded data packet may be a to-be-discarded data packet at an RLC layer, may be a to-be-discarded data packet at a PDCP layer, or may be a to-be-discarded data packet at another network layer.

The data packet discard condition is as follows.

In some embodiments, a device (for example, the transmit end) discards a data packet A (the to-be-discarded data packet) based on the discard condition. The discard condition may be whether the data packet A is within a range of a transmission window, and may be further whether an SN number corresponding to the data packet A is within the range of the transmission window. The transmission window may be a window corresponding to or reported by a sending window, or a window corresponding to or included in a receiving window.

The RLC protocol layer is used as an example. The data packet A is a data packet that has been delivered by the RLC protocol layer to a lower layer (for example, a MAC protocol layer), and the data packet A is a data packet that is sent by the PDCP layer to the RLC to be discarded. Therefore, the RLC layer of the transmit end discards the data packet that has been delivered to the lower layer, to avoid retransmission of the data packet and a waste of resources.

For example, when the data packet A is within the range of the transmission window, the device may discard the data packet A; or when the data packet A is not within the range of the transmission window, the device does not need to discard the data packet A, that is, does not need to perform any action. Because data packets outside the transmission window do not need to be maintained, the data packets do not need to be processed.

S102: The transmit end sends a discard report to a receive end.

In some embodiments, when the transmit end meets a send condition of the discard report, the transmit end may send the discard report to the receive end.

In some embodiments, the send condition of the discard report includes at least one of the following:
a quantity of data packets included in the discarded data packet is greater than a first quantity (for example, 100 or 200);
duration from previous sending of a discard report reaches first duration (for example, 30 seconds or 35 seconds), or a timer indicating the duration from previous sending of the discard report stops running (that is, the timer indicating the duration from previous sending of the discard report expires); and
at least one data packet that is not completely received by the receive end exists in the discarded data packet, or an acknowledgment feedback for at least one data packet of the discarded data packet is not received.

In some embodiments, when the RCL layer of the transmit end discards the data packet, the transmit end may send, to the receive end, a discard report indicating the data packet discarded by the RCL layer, for example, the foregoing discard report that includes the CPT field, the discard_SN field, and the FDS field. When the PDCP layer of the transmit end discards the data packet, the transmit end may send, to the receive end, a discard report indicating the data packet discarded by the PDCP layer, for example, the foregoing discard report that includes the PUD TYPE field, the discard_COUNT field, and the FDC field.

S103: The receive end updates a transmission status parameter based on the discard report.

In some embodiments, after receiving the discard report, the receive end may update the transmission status parameter, for example, a lower edge of the receiving window, based on the discarded data packet indicated by the discard report.

In some embodiments, the receive end may update a status parameter of the receive end based on a data packet discarded and/or to-be-discarded by the transmit end, and further update the status parameter of the transmit end based on an SN number of the data packet discarded or to-be-discarded by the transmit end, or further update the status parameter of the transmit end based on a COUNT value of the discarded and/or to-be-discarded data packet.

In some embodiments, the receive end may update status parameters of the RLC layer, for example, RX_Next, RX_High_Status, and RX_High_Status _Trigger. The receive end may also update status parameters of the PDCP layer, for example, RX_DELIV and RX_REORD.

A process in which the receive end updates the status parameter of the RLC layer is as follows.

For example, the RLC layer is used for description. When an RLC SN corresponding to a data packet B is equal to the lower edge (RX_Next) of the receiving window, when an RLC SN corresponding to one or more data packets of the discarded data packet is equal to the lower edge (RX_Next) of the receiving window, or when an RLC SN corresponding to one or more data packets of the discarded data packet includes the lower edge (RX_Next) of the receiving window, the receive end may update the lower edge of the receiving window. The data packet B is a data packet, determined by the receive end, that has been discarded or is to be discarded by the transmit end (that is, the foregoing discarded data packet), and may be indicated by the transmit end to the receive end.

In some embodiments, when an RLC SN corresponding to any data packet of the discarded data packet is different from RX_Next, the receive end does not update RX_Next.

In some embodiments, when the receive end receives a complete data packet, and an RLC SN of the data packet is RX_Next, the receive end may update RX_Next to an SN number with a smallest value in RLC SNs corresponding to data packets that are not completely received.

In some embodiments, when RX_Next is updated to an RLC SN with a smallest value in RLC SNs corresponding to discarded data packets, the receive end may update RX_Next to an RLC SN of data that follows consecutive data packets, of the discarded data packets, in which the RLC SN with the smallest value is located. It should be understood that an execution sequence of step S101 to step S103 is merely an example. In some other embodiments, an execution sequence of a part of steps may be adjusted, or a part of steps may be combined or split. This is not limited herein. For example, in some embodiments, step S101 and step S102 may be performed in parallel.

In some embodiments, step S101 to step 103 may be implemented by the RLC layers or the PDCP layers of the transmit end and the receive end.

According to the method, after the transmit end discards the data packet, the transmit end may send the discard report to the receive end, to notify the receive end of the discarded data packet, so that the receive end updates the lower edge of the receiving window to exit a pending state. In this way, a deadlock of data transmission between the transmit end and the receive end is avoided.

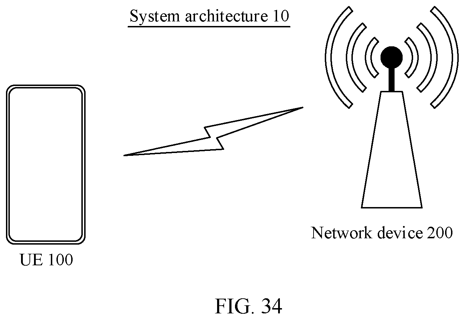

For example, FIG. 34 is a schematic diagram of a structure of a system architecture 10 to which a communication method is applicable according to an embodiment of this application. The system architecture includes a transmitter device 100 and a receiver device 200 (or referred to as a transmit end and a receive end).

In some embodiments, the transmitter device 100 may act as a transmit end of data packet transmission, and the receiver device 200 may act as a receive end of the data packet transmission.

In some embodiments, the transmitter device 100 may be various types of user equipment, such as a mobile phone, a tablet computer, a wearable device, an in-vehicle device, an augmented reality (augmented reality, AR)/virtual reality (virtual reality, VR) device, a cloud gaming (cloud gaming, CG) device, a mixed reality (mixed reality, MR) device, a notebook computer, an ultra-mobile personal computer (ultra-mobile personal computer, UMPC), a netbook, a personal digital assistant (personal digital assistant, PDA), and another device with audio/video and communication functions. A specific type of the transmitter device is not limited in embodiments of this application.

In some embodiments, the receiver device 200 may be a network device/core network device, for example, an access device through which the transmitter device 100 wirelessly accesses a wireless communication system. The receiver device 200 may be an entity, such as a base station, that is on a network side and configured to transmit or receive a signal. The base station may broadly cover or be substituted with various names such as NodeB (NodeB), evolved NodeB (evolved NodeB, eNB), next generation NodeB (next generation NodeB, gNB), relay station, access point, transmitting and receiving point (transmitting and receiving point, TRP), transmitting point (transmitting point, TP), master station MeNB, secondary station SeNB, multi-standard radio (MSR) node, home base station, network controller, access node, access point (AP), transmission node, transceiver node, baseband unit (BBU), remote radio unit (RRU), active antenna unit (AAU), radio head (RRH), central unit (CU), distributed unit (DU), and positioning node. The base station may be a macro base station, a micro base station, a relay node, a donor node, or the like. The base station may alternatively be used as a communication module, modem, or chip disposed in the foregoing device or apparatus. The base station may alternatively be a mobile switching center or a device taking on base station functions in device-to-device (D2D), vehicle-to-everything (V2X), or machine-to-machine (M2M) communication. A specific technology and a specific device form that are used by the network device are not limited in embodiments of this application.

In some embodiments, the transmitter device 100 may be a network device/core device, and correspondingly, the receiver device 200 may be user equipment.

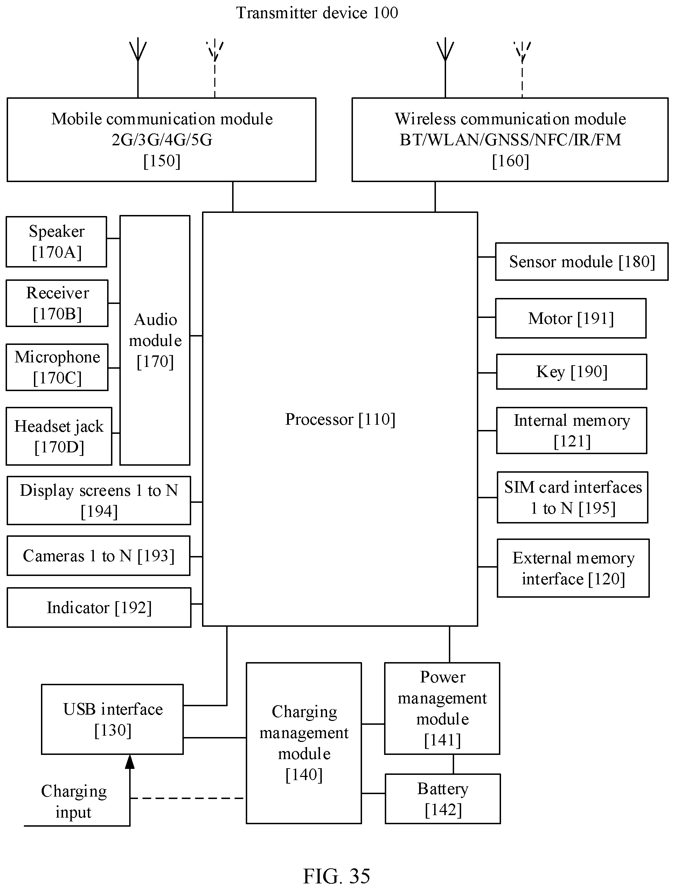

For example, FIG. 35 is a schematic diagram of a structure of a transmitter device 100 according to an embodiment of this application.

The transmitter device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

It may be understood that the structure shown in embodiments of this application does not constitute a specific limitation on the transmitter device 100. In some other embodiments of this application, the transmitter device 100 may include more or fewer components than those shown in the figure, or some components may be combined, or some components may be divided, or different component arrangements may be used. The components shown in the figure may be implemented by hardware, software, or a combination of software and hardware. In addition, an interface connection relationship between modules shown in embodiments of this application is merely an example for description, and does not constitute a limitation on the structure of the transmitter device 100. In some other embodiments of this application, the transmitter device 100 may alternatively use an interface connection manner different from that in the foregoing embodiment, or use a combination of a plurality of interface connection manners.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processor (neural-network processing unit, IPU). Different processing units may be independent devices, or may be integrated into one or more processors.

The controller may be a nerve center and a command center of the transmitter device 100. The controller may generate an operation control signal based on instruction operation code and a time-sequence signal, and control obtaining and executing of instructions.

A memory may be further disposed in the processor 110, and is configured to store an instruction and data. In some embodiments, the memory of the processor 110 is a cache memory. The memory may store an instruction or data that is just used or cyclically used by the processor 110. If the processor 110 needs to use the instruction or the data again, the processor may directly invoke the instruction or the data from the memory. This avoids repeated access, and reduces waiting time of the processor 110, so that system efficiency is improved.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. The power management module 141 may further be configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the transmitter device 100 may be implemented by using the antenna 1, the antenna 2, the mobile communication module 150, the wireless communication module 160, the modem processor, the baseband processor, and the like.

The antenna 1 and the antenna 2 are configured to transmit or receive an electromagnetic wave signal. Each antenna in the transmitter device 100 may be configured to cover one or more communication frequency bands. Different antennas may be further reused to improve antenna utilization. For example, the antenna 1 may be reused as a diversity antenna of a wireless local area network. In some other embodiments, the antennas may be used in combination with a tuning switch.

The mobile communication module 150 may provide a solution to wireless communication including 2G, 3G, 4G, 5G and the like applied to the transmitter device 100.

The wireless communication module 160 may provide a solution to wireless communication including a wireless local area network (wireless local area network, WLAN) (such as a wireless fidelity (wireless fidelity, Wi-Fi) network), Bluetooth (bluetooth, BT), a global navigation satellite system (global navigation satellite system, GISS), frequency modulation (frequency modulation, FM), a near field communication (near field communication, NFC) technology, an infrared (infrared, IR) technology, and the like applied to the transmitter device 100. The wireless communication module 160 may be one or more devices integrating at least one communication processing module. The wireless communication module 160 receives an electromagnetic wave by using the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave by using the antenna 2 for radiation.

In some embodiments, in the transmitter device 100, the antenna 1 is coupled to the mobile communication module 150, and the antenna 2 is coupled to the wireless communication module 160, so that the transmitter device 100 can communicate with a network and another device by using a wireless communication technology. The wireless communication technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GISS, a WLAN, IFC, FM, an IR technology, and/or the like. The GISS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS) and/or satellite based augmentation systems (satellite based augmentation systems, SBAS).

The transmitter device 100 implements a display function by using the GPU, the display screen 194, the application processor, and the like. The display screen 194 is configured to display an image, video, and the like.

The external memory interface 120 may be configured to connect to an external storage card such as a micro SD card, to extend a storage capability of the transmitter device 100. The external memory card communicates with the processor 110 through the external memory interface 120, to implement a data storage function. For example, files such as music or videos are stored in the external memory card.

The internal memory 121 may be configured to store computer-executable program code, and the computer-executable program code includes an instruction. The internal memory 121 may include a program storage area and a data storage area. The program storage area may store an operating system, an application required by at least one function (for example, a sound playback function and an image display function), and the like. The data storage area may store data (such as audio data or an address book) created during use of the transmitter device 100. In addition, the internal memory 121 may include a high-speed random access memory, and may further include a non-volatile memory, such as at least one magnetic disk storage device, a flash memory device, or a universal flash storage (universal flash storage, UFS). The processor 110 performs various functional applications and data processing of the transmitter device 100 by running the instruction stored in the internal memory 121 and/or the instruction stored in the memory disposed in the processor.

The transmitter device 100 may implement an audio function by using the audio module 170, the speaker 170A, the receiver 170B, the microphone 170C, the headset jack 170D, the application processor, and the like. For example, music playing and sound recording are implemented.

In some embodiments, the receiver device 200 may use a structure similar to or the same as that of the transmitter device 100, or may use a different structure. This is not limited herein.

Based on the same technical concept, an embodiment of this application further provides a transmitter device. The transmitter device includes one or more processors and one or more memories. The one or more memories store one or more computer programs, and the one or more computer programs include an instruction. When the instruction is executed by the one or more processors, the transmitter device is enabled to perform one or more steps in any one of the foregoing methods.

Based on the same technical concept, an embodiment of this application further provides a communication system. The communication system includes a transmitter device and a receiver device. The transmitter device is configured to perform one or more steps in any one of the foregoing methods, and the receive end is configured to receive a data packet in a protocol data unit set transmitted by the transmit end.

Based on a same technical concept, an embodiment of this application further provides a computer-readable storage medium. The computer-readable storage medium stores a computer-executable program instruction. When the computer-executable program instruction is run on a computer, the computer or a processor is enabled to perform one or more steps in any one of the foregoing methods.

Based on a same technical concept, an embodiment of this application further provides a computer program product including an instruction. The computer program product includes computer program code. When the computer program code is run on a computer, the computer or a processor is enabled to perform one or more steps in any one of the foregoing methods.

It should be noted that, in embodiments of this application, descriptions about numerical intervals such as "A is between B and C" may include endpoints (for example, B and C) or may not include endpoints. That is, "A is between B and C" may be B < A < C, or may be B ≤ A < C, or may be B ≤ A ≤ C or B < A ≤ C.

It should be noted that terms used in implementation parts of embodiments of this application are merely used for explaining specific embodiments of this application, and are not intended to limit this application. In descriptions of embodiments of this application, "/" means "or" unless otherwise specified. For example, A/B may represent A or B. In this specification, "and/or" describes only an association relationship for describing associated obstacles and represents that three relationships may exist. For example, A and/or B may represent the following three cases: Only A exists, both A and B exist, and only B exists. In addition, in the descriptions of embodiments of this application, unless otherwise specified, "a plurality of" means two or more than two, and "at least one" and "one or more" mean one, two, or more.

All or some of the foregoing embodiments may be implemented by software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

A person of ordinary skill in the art can understand that all or some of the procedures of the methods in the foregoing embodiments may be implemented by a computer program instructing related hardware. The program may be stored in a computer-readable storage medium. When the program is executed, the procedures in the foregoing method embodiments may be included. The storage medium includes any medium that can store program code, such as an ROM, a random access memory RAM, a magnetic disk, and an optical disk.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A communication method, applied to a transmit end, wherein the method comprises:
determining a discarded data packet; and
sending a first packet to a receive end, wherein the first packet indicates the discarded data packet.

2. The method according to claim 1, wherein sending the first packet to the receive end comprises:
sending the first packet to the receive end when detecting that a first condition is met, wherein
the first condition comprises at least one of the following:
a quantity of data packets comprised in the discarded data packet is greater than a first quantity;
duration from previous sending of the first packet reaches first duration, or a timer indicating the duration from previous sending of the first packet stops running; and
at least one data packet that is not completely received by the receive end exists in the discarded data packet, or an acknowledgment feedback for at least one data packet of the discarded data packet is not received.

3. The method according to claim 1 or 2, wherein the first packet comprises first information, and the first packet indicates the discarded data packet by using the first information.

4. The method according to claim 3, wherein the first information comprises:
a first field, indicating a sequence number or a COUNT value of the discarded data packet.

5. The method according to claim 4, wherein the first information further comprises at least one of the following fields:
a second field, wherein the second field indicates whether consecutively discarded data packets exist;
a third field, wherein the third field indicates a quantity of consecutively discarded data packets;
a fourth field, indicating a quantity of pieces of discard information carried in the first packet, wherein one piece of discard information indicates one discarded data packet or a plurality of consecutively discarded data packets;
a fifth field, wherein the fifth field indicates whether discard information still exists;
a sixth field, indicating a discard status of at least one data packet, wherein the discard status is "discarded" or "not discarded"; and
a seventh field, indicating a length of the sixth field.

6. The method according to claim 4, wherein the discarded data packet comprises P data packets, the first information comprises M first fields, P and M are positive integers, and M≥P; and
first P first fields of the M first fields indicate sequence numbers or COUNT values of the P data packets.

7. The method according to claim 6, wherein
corresponding to the first field indicating the sequence number of the discarded data packet and comprising 12 bits, an i^{th} first field occupies (12i-8)^{th} to (12i+3)^{th} bits of the first packet;
corresponding to the first field indicating the sequence number of the discarded data packet and comprising 18 bits, an i^{th} first field occupies (18i-14)^{th} to (18i+3)^{th} bits of the first packet; or
corresponding to the first field indicating the COUNT value of the discarded data packet, an i^{th} first field occupies (32i-14)^{th} to (32i+8)^{th} bits of the first packet, wherein i is a positive integer, and 1≤i≤M.

8. The method according to claim 5, wherein the first information comprises the first field, the second field, and the third field; and
the first field indicates a sequence number or a COUNT value of a 1^{st} data packet of consecutively discarded data packets, or indicates a sequence number or a COUNT value of a separately discarded data packet.

9. The method according to claim 8, wherein the discarded data packet comprises J groups of data packets, and one group of data packets of the J groups of data packets comprises a group of consecutively discarded data packets or one separately discarded data packet; and
the first information comprises M first fields, M second fields, and M third fields, and first J first fields, first J second fields, and first J third fields in the first information indicate the J groups of data packets, wherein J and M are positive integers, and M≥J.

10. The method according to claim 8 or 9, wherein
an i^{th} third field is located after an i^{th} second field.

11. The method according to claim 8 or 9, wherein the first information further comprises the fourth field.

12. The method according to claim 11, wherein the fourth field is located before a 1^{st} first field.

13. The method according to claim 5, wherein the first information comprises the first field, the second field, the third field, and the fifth field; and
the first field indicates a sequence number or a COUNT value of a 1^{st} data packet of consecutively discarded data packets, or indicates a sequence number or a COUNT value of a corresponding separately discarded data packet.

14. The method according to claim 13, wherein
an i^{th} fifth field is located after an i^{th} first field; and
an i^{th} second field is located after the i^{th} fifth field.

15. The method according to claim 5, wherein the first information comprises the first field and the sixth field; and
the first field indicates a sequence number or a COUNT value of a 1^{st} data packet of the discarded data packet.

16. The method according to claim 15, wherein
the sixth field is located after the first field.

17. The method according to claim 15, wherein the first information further comprises the seventh field.

18. The method according to claim 17, wherein
the seventh field is located before the sixth field.

19. The method according to claim 3, wherein the first packet further comprises:
second information, indicating that the first packet is a control packet; and
third information, indicating that the first packet is a packet indicating the discarded data packet.

20. The method according to claim 3, wherein a structure of the first packet is the same as a structure of a second packet;
the second packet comprises an eighth field, a ninth field, a tenth field, an eleventh field, a twelfth field, a thirteenth field, a fourteenth field, a fifteenth field, and a sixteenth field; and
the eighth field is a second value different from a first value, the first value is a value used when the second packet indicates a receiving status of a data packet, and the second value is a value used when the second packet indicates the discarded data packet; and when the eighth field is the first value: the ninth field is a field indicating a sequence number of a data packet that is neither reported as lost nor received by the receive end;
the tenth field is a field indicating whether the thirteenth field, the fourteenth field, and the fifteenth field exist subsequently;
the eleventh field is a field indicating a sequence number of a data packet detected as lost at the receive end;
the twelfth field is a field indicating whether the thirteenth field and the fourteenth field exist subsequently;
the thirteenth field is a field indicating a sequence number of a 1^{st} data packet of consecutively discarded data packets;
the fourteenth field is a field indicating a sequence number of a last data packet of the consecutively discarded data packets;
the fifteenth field is a field indicating whether consecutive data packets that are not received by the receive end exist; and
the sixteenth field is a field indicating a quantity of consecutively discarded data packets starting from the data packet indicated by the fourteenth field; or
when the eighth field is the second value:
the ninth field indicates a sequence number following a largest sequence number in discarded data packets;
the tenth field indicates whether discard information exists subsequently;
the eleventh field indicates a sequence number of the discarded data packet;
the twelfth field is 0 or an R bit;
the thirteenth field indicates a sequence number of a 1^{st} data packet of consecutively discarded data packets;
the fourteenth field indicates a sequence number of a last data packet of the consecutively discarded data packets;
the fifteenth field indicates whether consecutive data packets exist; and
the sixteenth field indicates a quantity of consecutively discarded data packets.

21. The method according to claim 3, wherein a structure of the first packet is the same as a structure of a second packet;
the second packet comprises a seventeenth field, an eighteenth field, and a nineteenth field;
the seventeenth field is a second value different from a first value, the first value is a value used when the second packet indicates a receiving status of a data packet, and the second value is a value used when the second packet indicates the discarded data packet; and
when the seventeenth field is the first value:
the eighteenth field is a field indicating a sequence number or a COUNT value of a 1^{st} lost data packet; and
the nineteenth field indicates a lost data packet or a correctly received data packet of a received data packet; or
when the seventeenth field is the second value:
the eighteenth field indicates a sequence number or a COUNT value of a 1^{st} discarded data packet; and
the nineteenth field indicates a discard status of the data packet.

22. A transmitter device, comprising:
one or more processors; and
one or more memories, wherein
the one or more memories store one or more computer programs, the one or more computer programs comprise an instruction, and when the instruction is executed by the one or more processors, the transmitter device is enabled to implement the method according to any one of claims 1 to 21.

23. A computer-readable storage medium, wherein the computer-readable storage medium stores a computer-executable program instruction, and when the computer-executable program instruction is run on a computer, the computer is enabled to implement the method according to any one of claims 1 to 21.

24. A computer program product, wherein the computer program product comprises computer program code, and when the computer program code is run on a computer, the computer is enabled to implement the method according to any one of claims 1 to 21.
